# EUROPÄISCHE PATENTSCHRIFT

(11) **EP 2 976 371 B1**
(45) Veröffentlichungstag und Bekanntmachung des Hinweises auf die Patenterteilung: **01.01.2020**
(21) Anmeldenummer: 14711702.2
(22) Anmeldetag: 03.03.2014
(51) Int. Cl.: C08G 18/48, C08G 18/69, C08G 18/76, C08K 5/20, C08K 5/3445, C08K 5/549, C08G 101/00, C08K 5/544, C08J 9/00

(54) **HERSTELLUNG VON POLYURETHANSCHÄUMEN, DIE POLYOLE AUF POLYOLEFINBASIS ENTHALTEN**
PRODUCTION OF POLYURETHANE FOAMS CONTAINING POLYOLS BASED ON POLYOLEFIN
PROCÉDÉ DE FABRICATION DE MOUSSES DE POLYURÉTHANE CONTENANT DES POLYOLS À BASE DE POLYOLÉFINE

(30) Priorität: 21.03.2013 DE 102013204991
(43) Veröffentlichungstag der Anmeldung: 27.01.2016
(73) Patentinhaber: Evonik Operations GmbH, 45128 Essen (DE)
(72) Erfinder: LANDERS, Ruediger, 45257 Essen (DE); TERHEIDEN, Annegret, 46519 Alpen (DE); HUBEL, Roland, 45136 Essen (DE)
(74) Vertreter: Evonik Patent Association
(86) Internationale Anmeldenummer: PCT/EP2014/054037
(87) Internationale Veröffentlichungsnummer: WO 2014/146888

(56) Entgegenhaltungen:
- EP-A2- 2 551 287
- US-A- 3 582 499
- US-A1- 2007 197 672

## Beschreibung

Die vorliegende Erfindung liegt auf dem Gebiet der Polyurethane. Sie betrifft insbesondere Polyurethanschäume, die Polyole auf Polyolefinbasis enthalten. Sie betrifft ein Verfahren zur Herstellung solcher Polyurethanschäume, bei welchem eine bestimmte Additivzusammensetzung eingesetzt wird.

Polyurethane unterschiedlicher Art werden üblicherweise durch die Polymerisation von Diisocyanaten, wie z. B. 4,4'-Methylenbis(phenylisocyanat), kurz MDI, oder 2,4-Toluylendiisocyanat, kurz TDI, mit Polyether-Polyolen oder Polyester-Polyolen hergestellt. Polyether-Polyole können z.B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethanschäumen kommen üblicherweise zusätzliche Treibmittel zum Einsatz, wie z.B. Pentan, Methylenchlorid, Aceton oder Kohlenstoffdioxid. Als chemisches Treibmittel wird meist Wasser eingesetzt, welches unter Abspaltung von Kohlendioxid mit Isocyanat zu einem Polyharnstoff reagiert. Üblicherweise werden zur Stabilisierung des Polyurethanschaums oberflächenaktive Substanzen, insbesondere Silikontenside eingesetzt.

Eine Vielzahl verschiedener Polyurethanschäume, wie beispielsweise Heißweichschaum, Kaltschaum, Esterschaum, PUR-Hartschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

Polyurethan-Weichschäume werden eingesetzt für Polstermöbel, Matratzen und andere Anwendungen im Komfortbereich. Normalerweise werden hierfür Polyether-Polyole und aromatische Isocyanate eingesetzt. Etherpolyole werden hergestellt durch Alkoxylierung mehrfunktioneller Starter wie Glyzerin durch Anlagerung von Alkylenoxiden wie Propylenoxid oder Ethylenoxid. Polyetherpolyole können Wasserstoffbrücken mit Wasser eingehen. Daher können Polyetherpolyole in gewissen Grenzen mit Wasser gemischt werden und die daraus hergestellten, vernetzten Polyurethanschäume nehmen in begrenztem Umfang Wasser in die Netzwerkstruktur auf, wenn in der Umgebung Feuchtigkeit vorhanden ist. Dieses Quellen von Polyurethanschäumen basierend auf Polyether-Polyolen ist für viele Spezialanwendungen problematisch. So ist dies für Schäume nachteilig, die als Dichtmaterialien eingesetzt werden sollen. Die Alterungseigenschaften leiden unter dem Eindringen von Wasser. Und schließlich können mit dem beim Quellen eindringenden Wasser weitere Substanzen in die Polyurethanstruktur eindringen, die nachteiligen Einfluss auf die Eigenschaften haben. Als Beispiel kann hier das Wasser von Schwimmbädern dienen, das chlorhaltig ist. Chlor - auch in geringen Spuren - oxidiert Polyether-Polyole und verschlechtert die Haltbarkeit des Polyurethanschaums. Ein anderes Beispiel ist das Eindringen von salzhaltigem Meerwasser in das Polyurethan. Aus all diesen Gründen besteht seit langem Interesse an der Entwicklung von elastischen PU-Schäumen mit reduzierter Wasseraufnahme. Da das Grundproblem die hydrophile Natur der Polyether-Polyole ist, wurde versucht, das Polyether-Polyol mindestens partiell durch andere hydrophobere Polyole zu substituieren. Polyester-Polyole sind dafür diskutiert worden, allerdings ist die Esterbindung selbst nicht hydrolysestabil und Polyurethanschäume basierend auf Polyester-Polyolen weisen daher eine hydrolytische Instabilität auf, selbst wenn sie insgesamt eine geringere Wasseraufnahme haben. Eine Lösung könnten dabei Polyole sein, die lange Alkyl- oder Alkylenketten eventuell auch mit Verzweigungen aufweisen. Beispiele hierfür sind Polybutadien-Polyole oder hydrierte Polybutadien-Polyole, aber auch Polyisopren-Polyole oder Ölsäurediethanolamid (DE2901335A1). Durch die reduzierte Wasseraufnahme verbessert sich dabei auch der Druckverformungsrest, messbar gemäß EN ISO 1856, z.B. nach feuchter Lagerung (Messbedingungen gemäß ASTM D3574, siehe z.B. auch JP04-136017A). Weitere bekannte Vorteile von Polyurethanschäumen enthaltend Polybutadien-Polyol sind eine verbesserte Haftung an hydrophoben Substraten (z.B. PP-Folien)(JP2003-277464A)(US5849806) und an Papier (JP2005-042103A, US2006/0223900A1) oder eine verbesserte Absorption hydrophober Flüssigkeiten oder Öle (DE2901335A1). Ein anderer Vorteil besteht in der verbesserten Tieftemperaturelastizität (DE10227187A1). Ein weiterer Vorteil kann in der verbesserten Beständigkeit gegenüber Witterungseinflüssen bestehen (JP03-064313A, JP04-136017A).

Zahlreiche Versuche wurden unternommen, speziell die kommerziell verfügbaren Polybutadien-Polyole in elastische Polyurethanweichschäume einzubauen. Dabei ergeben sich allerdings grundsätzliche Probleme. Aufgrund der hydrophoben Natur der Polybutadien-Polyole sind sie in Polyether-Polyolen und mit Wasser nicht mischbar. Dies führt zu erheblichen technischen Problemen, da bei der Polyurethanweichschaumherstellung das Polyol mit dem Isocyanat und dem Wasser gemischt wird. Innerhalb kurzer Zeit muss dann die Reaktion des Isocyanats sowohl mit dem Polyol als auch mit dem Wasser erfolgen. Normalerweise erfolgt die Herstellung von Polyurethanweichschaum in einem kontinuierlichen Verfahren und die Zeitspanne vom Mischen der Komponenten bis zur Verfestigung (Gelpunkt) ist kürzer als 3 Minuten. Trotz des Einsatzes starker Katalysatoren ist es dabei wichtig recht schnell eine homogene Mischung der Reaktionspartner zu erzielen, um den weiteren Fortgang der Reaktion zu ermöglichen. Mischungen von Polyether-Polyolen mit Polybutadien-Polyolen neigen aber zur Entmischung. Dies beschränkt die Reaktion auf Phasengrenzflächen und senkt die Stabilität des sich bildenden Schaums. Das Ergebnis ist eine Schäummischung die langsam Gas entwickelt und immer wieder beim Aufschäumen kollabiert. Kleine Mengen (< 5 %) solcher hydrophober Polyole aber auch nicht OH-funktioneller Polybutadiene können jedoch gezielt zur Verstärkung der Zellöffnung von Polyurethanen eingesetzt werden (WO2010/009205, US2004/0147627A1). Zur Erzielung der gewünschten Eigenschaften wie der Reduktion vom Aufquellen der Polyurethanmatrix in Wasser reichen diese Gehalte aber normalerweise nur teilweise. Beispiele für den Einsatz relativ kleiner Mengen an Polybutadien-Polyol finden sich zum Beispiel in DE19731680 A1 oder US5874484. Bei höheren Gehalten an Polybutadien-Polyol wird die Destabilisierung dann so stark, dass ein Kollaps beobachtet wird.

Darüber hinaus ist die stark exotherme Reaktion zwischen dem Isocyanat und dem Wasser wichtig für die Erwärmung der Reaktionsmischung und die korrekte Aushärtung. Da Wasser mit dem Isocyanat unter Bildung von Kohlendioxid reagiert und damit als Treibreaktion das sich bildende Polymer aufschäumt, nimmt die typischerweise eingesetzte Wassermenge mit abnehmendem Raumgewicht (Dichte) des herzustellenden Polyurethanschaums zu. So werden für elastische Polyurethanweichschäume mit einem typischen Raumgewicht von 25 kg/m³ in der Regel etwa 4 Teile Wasser bezogen auf 100 Teile Polyol eingesetzt. Bei Zusatz oder alleiniger Verwendung von Polybutadien-Polyol mischt sich das Wasser dabei nicht mit der Mischung aus Polyol und Isocyanat. Konsequenterweise startet die Treibreaktion nicht in korrekter Weise. Die Reaktionsmischung erwärmt sich dementsprechend nicht ausreichend und auch die Gelreaktion zwischen Isocyanat und Polyol ist dadurch sehr langsam. Selbst wenn über die daraus resultierende lange Reaktionszeit eine Stabilität der sehr langsam aufschäumenden Mischung gewährleitet werden könnte, so ist diese Reaktionsdauer mit dem technischen Aufbau moderner Anlagen zur kontinuierlichen Herstellung von Polyurethanweichschaum nicht kompatibel.

Um diese Probleme beim Zusatz oder bei der alleinigen Verwendung von Polybutadien-Polyolen zu vermeiden, sind zahlreiche Ansätze ausprobiert worden.

Zunächst einmal wurde versucht, Polyurethanschäume mit sehr hohem Raumgewicht herzustellen. Der Vorteil ist hierbei der geringe Wassergehalt. So lassen sich auf diese Weise z.B. Dichtschäume mit Raumgewichten von 400 - 750 kg/m³ (EP0173004) oder 300 - 900 kg/m³ (JP2005-042103A) herstellen. Besonders, wenn dann noch ein Gas in die Reaktionsmischung mittels eines speziellen Schlagschaumrührers eingerührt wird und damit physikalisch ein Aufschäumen bewirkt wird, kann die Wassermenge weiter stark reduziert werden (JP2003-136614A, JP2010-174146A). Es gibt hierbei sogar Formulierungen die völlig ohne Wasser als chemisches Treibmittel auskommen und die Kompatibilitätsprobleme daher weitestgehend vermeiden. Um dann eine ausreichende Erwärmung und damit ausreichend schnelle Reaktion zu gewährleisten müssen entweder erwärmte Rohstoffe eingesetzt werden (WO97/00902) oder der Reaktionsmischung Wärme zugeführt werden. Polyurethanweichschäume mit niedrigem Raumgewicht lassen sich auf diese Weise aber nicht gewinnen.

Bei der Herstellung von Polyurethan-Formschäumen wird die Reaktionsmischung in eine vorgewärmte Form gegeben. Bedingt durch die Erwärmung durch die Form, dem höheren Raumgewicht und dem Einsatz spezieller hochreaktiver Polyole kann bei geeigneter Wahl der Reaktionsbedingungen eine gewisse Menge an Polybutadien-Polyol ohne Instabilität bei der Verschäumung eingesetzt werden. Beispiele hierfür sind zu finden in DE2901335A1, wo ein hydrophober Polyurethan Formschaum aus 30 Teilen Polybutadien-Polyol und 70 Teilen Polyether-Polyol erwähnt wird. In JP2003-277464A wird ein Polyurethan-Formschaum mit einer relativ kleinen Menge (0-5 %) Polybutadien-Polyol erwähnt und in JP 2005-042103A ein Formschaum mit hohem Raumgewicht (300-900 kg/m³) für Drucker-Transportrollen.

Analog wird in JP2010-230114A ein Polyurethan-Formschaum zur Herstellung von Formteilen mit Vibrationen absorbierenden Eigenschaften beschrieben. In US4190712 wird die Herstellung von Stoßfängern aus Polyurethan-Formschaum beschrieben. In US 4454253 wird ein Polyurethan-Formschaum beschrieben, der als Sportball verwendet werden kann. Dieser wurde sogar vollständig aus Polybutadien-Polyol als Polyolkomponente hergestellt. Ebenso wird in WO97/00902 ein Polyurethan-Formschaum alleinig mit Polybutadien-Polyol als Polyolkomponente offengelegt. Polyurethan-Formschäume sind nach außen durch eine Haut begrenzt und könne nur bis zu einer bestimmten Größe hergestellt werden. Speziell für Anwendungen im Matratzensegment, aber auch vielen anderen Weichschaumanwendungen sind sie schlecht geeignet und die frei gestiegenen Polyurethanweichblockschäume werden typischerweise verwendet.

Im Gegensatz zu Formschäumen sind frei gestiegene Schäume wesentlich empfindlicher und insbesondere beim Einsatz signifikanter Mengen Polybutadien-Polyol werden Entschäumungen und Kollaps beobachtet. Daher sind Lösungsvorschläge insbesondere für diese Verschäumungstechnologie von großem Interesse.

Ein erster Lösungsvorschlag ist die kovalente Anbindung des hydrophoben Polybutadien-Poyols an ein verträgliches Material wie z.B. ein Polyether-Polyol. Zahlreiche Versuche sind daher bekannt, um Blockcopolymere aus Polybutadien-Polyol und Polyether-Polyolen zur erreichen. Dies kann durch gezielte Alkoxylierung von Polybutadien-Polyol erfolgen. So wurden DMC-Katalysatoren zur Alkoxylierung von Polybutadienen mit organischen Epoxiden eingesetzt (EP2003156A1). Die so hergestellten Blockcopolymere wurden dann für 1-Komponenten-Dosenschaum (Hartschaum) verwendet. EP0690073A1 zeigt die Alkoxylierung von Polybutadienpolyolen zur Verwendung im Polyurethan-Weichschaum (10 Teile bezogen auf 100 Teile Polyol). Eine analoge Alkoxylierung von Polybutadien-Polyol wird auch in JP04-136017A beschrieben, wobei der hier beschriebene Polyurethan-Weichschaum zusätzlich noch ein gefülltes Polymerpolyol (Styrol-Acrylnitril-Partikel) enthält. JP55-127422A beschreibt ebenfalls die Alkoxylierung eines Polybutadien-Polyols und die Verwendung zur Herstellung eines Polyurethanweichformschaums. Nachteil aller dieser Varianten ist es, dass zunächst einmal das kommerzielle verfügbare Polybutadien-Polyol alkoxyliert werden muss. Dies stellt einen zusätzlichen Prozessschritt dar. Die Verfügbarkeit derartige Polyole in industrieller Menge ist daher bisher nicht gegeben und der Preis für kleine Spezialchargen entsprechend hoch.

Ein anderer Lösungsweg ist die vorherige Umsetzung von dem Polybutadienpolyol mit dem Isocyanat und gebenenfalls Polyol zu einem höhermolekulareren Präpolymer, welches sowohl Blöcke aus hydrophobem Polybutadien als auch kompatiblen Blöcken beinhaltet. Durch die Präpolymerisation steigen Molmasse und Viskosität, was die Stabilität des sich später in einem zweiten Schritt bildenden Polyurethan-Weichschaums positiv beeinflusst. Unabhängig von der Frage ob für diese Präpolymer nun ein Überschuss Isocyanat oder eine Überschuss OH-Gruppen eingesetzt wird, gelangt man doch zu Reaktionsprodukten mit verbesserter Kompatibilität, die dann in einem zweiten Schritt mit dem Wasser und dem verbliebenen Isocyanat/Polyol zum Polyurethan-Weichschaumstoff umgesetzt werden. Beispiele hierfür sind DE10227187A1, wo ein monofunktionelles Polybutadien mit Polyether-Polyol zu einem Präpolymer umgesetzt wird und dieses dann für die Herstellung von Polyurethan-Schuhsohlen Verwendung fand. In DE19731680A1 werden Präpolymere mit Polyester- und/oder Polyether-Polyol für die Verwendung in 1-Komponenten-Schaum beschrieben. In JP64-070518A werden Präpolymere aus Polybutadien-Polyol und Polyether-Polyol hergestellt und diese Präpolymere dann mit Isocyanat und Wasser zu Polyurethan-Weichschäumen umgesetzt. In JP2005-281674A wird ein Präpolymer aus MDI, Polybutadien-Polyol und Polyether-Polyol aufgebaut und zu einem Dichtschaum aufgeschäumt. In JP2010-230114A wird ein isocyanat-terminiertes Präpolymer aus Polybutadien-Polyol und einem trifunktionellem Polyether-Polyol aufgebaut und für die Herstellung eines Polyurethan-Formschaums eingesetzt. Nachteil all diese Präpolymere ist die hohe Viskosität. Dadurch ist ein Einsatz in konventionellen Produktionsanlagen für Polyurethanweichschaum nicht möglich, da die Pumpen hier typischerweise nur Rohstoffe mit einer maximalen Viskosität von 5000 mPa*s fördern können. Möglich ist dagegen der Einsatz solcher hochviskosen Rohstoffe für Formschäume, bei denen eine relativ kleine Menge in eine Form gegeben wird und dann die Form ausfüllt.

Die hohe Viskosität der Rohstoffe ist aber hilfreich, die durch Inkompatibilitäten verursachten Instabilitäten zu überwinden. Neben der Herstellung von Präpolymeren wurde dabei besonders auch der Einsatz von Viskositätsreglern (Verdickern) getestet. Besonders Thixotropierungsmittel wurden dabei erfolgreich eingesetzt. So beschreibt US 5874484 die Verwendung von Dibenzylidensorbitol als Verdicker beim Einsatz von 1-20% Polyolefin-Polyol und 80-99% Polyether-Polyol zur Herstellung eines Polyurethan-Weichschaums. Das Dibenzylidensorbitol wurde dabei in erwärmten Polyether-Polyol gelöst und verdickt es dann nach dem Abkühlen. Aber auch ein solcher Einsatz von Verdickern scheitert auf kommerziellen Weichblockschaumanlagen aufgrund der hohen Viskosität.

In einer anderen Lösungsstrategie wird die Reaktivität der Endgruppen des Polybutadien-Polyols durch polymeranaloge Umsetzung erhöht, so dass es trotz anfänglicher Inkompatibilität dennoch an der Phasengrenze zu einem raschen Start der Reaktion kommt. Beispiele hierfür sind aminierte Polybutadien-Polyole wie in EP0393962A2 oder EP0690073A1 erwähnt. Primäre und sekundäre AminGruppen reagieren dabei mit Isocyanaten wesentlich schneller als die analogen Alkohole. Die Aminierung von Polybutadien-Polyol ist aber ein zusätzlicher Prozessschritt und derartige Rohstoffe sind kommerziell derzeit nicht verfügbar.

Eine weitere Möglichkeit besteht in der Verwendung eines Lösungsmittels, welches beide Komponenten löst. Dieses kann zum einen ein physikalisches Treibmittel für die Verschäumung sein, aber auch ein Weichmacher. Hierbei bewirkt das Lösungsmittel eine Homogenisierung der Reaktionsmischung und damit eine ausreichend schnellen Start der Reaktion. Das Lösungsmittel kann dabei auch später als Weichmacher für den Polyurethan-Weichschaum wirken. Beispiele für diese Technologie sind in WO98/52986 aufgeführt. Die Verwendung eines solchen Lösungsmittels bringt aber Nachteile mit sich, da es zu VOC Emissionen des Polyurethan-Weichschaums beitragen kann und zudem die physikalischen Eigenschaften des gebildeten Polyurethan-Weichschaums verändert.

Schließlich wird in JP10081142A die Verwendung eines bestimmten Tensides zur Verbesserung der Kompatibilisierung von Polybutadien-Polyol und Wasser bei der Herstellung eines Polyurethan-Weichformschaums beschrieben. Bei dem Tensid handelt es sich um einen Fettsäureester basierend auf Rizinolsäure. Dieses Fettsäureestersulfat wurde schließlich in einer Menge äquivalent zur Wassermenge der Verschäumungsmischung zugesetzt. Diese technische Lösung ermöglicht die direkte Verwendung von kommerziellem Polybutadien-Polyol. Problematsich bleibt dabei allerdings die relativ langsame Reaktion zwischen dem Polybutadien-Polyol und dem Isocyanat. Trotz der Verwendung eines Tensides mussten zusätzlich 40 Teile eines Weichmachers (Diundecylphthalat - DUP) zugegeben werden, um die Kompatibilisierung zu unterstützen. Es wurde Formschäume hegestellt, die im Automobilbau verbesserte Dämpfungseigenschaften bei gleichzeitiger Wasserbeständigkeit aufweisen. Diese technische Lösung ermöglicht die Verwendung von kommerziellem Polybutadien-Polyol zur Herstellung von Polyurethan-Weichschäumen. Allerdings wird immer noch zusätzlich ein Lösungsmittel benötigt und bedingt durch die langsame Reaktion können nur Formschäume hergestellt werden. Die Herstellung von frei gestiegenen Polyurethan-Weichschäumen wird in dieser Literaturstelle nicht beschrieben und ist nach der dortigen Lehre auch nicht möglich.

EP2551287A2 beschreibt eine Additivzusammensetzung zur Steuerung der Schaumeigenschaften von Polyurethanschäumen, wobei die Zusammensetzung a) mindestens ein anionisches Tensid und/oder mindestens ein ionisches Tensid, ausgewählt aus einer quaternisierten Ammoniumverbindung, und c) mindestens eine tertiäre Aminverbindung, die eine Molmasse von mindestens 150 g/mol aufweist, und/oder d) mindestens ein Oxazasilinan enthält.

US3,582,499 beschreibt organische zellulare Materialien, hergestellt aus geschäumten reaktiven Polymer-Latices, die mit einem organischen Polyisocyanat behandelt sind, um die Latices in einen vernetzten retikulär strukturierten Schaum umzuwandeln.

US2007/197672 A1 beschreibt schäumbare einkomponentige Polyurethanzusammensetzungen, enthaltend ein hochfunktionelles Isocyanat-terminiertes Quasi-Prepolymer, ein hydratisiertes Salz sowie mindestens einen Katalysator für die Reaktion zwischen einer Isocyanatgruppe und Wasser.

Zusammenfassend kann gesagt werden, dass in der Literatur keine technische Lehre bekannt ist, wie (insbesondere frei gestiegene) Polyurethan-Weich(block)schäume mit einem signifikanten Anteil an Polyolefin-Polyol, insbesondere Polybutadien-Polyol (z.B. ≥ 15 % Polyolefin-Polyol bezogen auf die eingesetzte Menge Polyol) ohne Verwendung aufwändiger Präpolymer-Techniken oder ebenso komplexer Alkoxylierungsreaktionen und mit einer Dichte unter 100 kg/m³ hergestellt werden können.

Die konkrete zu lösende Aufgabe der vorliegenden Erfindung war es vor diesem Hintergrund, einen einfachen Zugang zu solchen Polyurethanschäumen, insbesondere frei gestiegenen Polyurethan-Weichblockschäumen, die Polyole auf Polyolefinbasis, insbesondere Polybutadienbasis enthalten, bereitzustellen.

Überraschenderweise wurde nun gefunden, dass ein Zugang zu solchen Polyurethanschäumen durch den Einsatz einer bestimmten Additivzusammensetzung ermöglicht wird.

Die zu bewältigende Aufgabe wird durch den Gegenstand der Erfindung gelöst, nämlich einem Verfahren zur Herstellung von (insbesondere frei gestiegenen) Polyurethanschäumen mit einer Dichte < 100 kg/m³ durch Umsetzung einer oder mehrerer Polyolkomponenten mit einer oder mehrerer Isocyanatkomponenten, wobei mindestens 15 Gew. % Polyolefin-Polyol bezogen auf die gesamte eingesetzte Menge Polyol eingesetzt werden, wobei als Additiv eine Additivzusammensetzung enthaltend
mindestens ein ionisches Tensid B, ausgewählt aus einer quaternisierten Ammoniumverbindung,
sowie
mindestens eine tertiäre Aminverbindung C, die kein Oxazasilinan ist und eine Molmasse von mindestens 150 g/mol aufweist, sowie
mindestens ein Oxazasilinan D,
eingesetzt wird.

Durch den erfindungsgemäßen Einsatz der genannten Additivzusammensetzung können mit Hilfe des erfindungsgemäßen Verfahrens Polyurethanschaumstoffe wie insbesondere Polyurethanweichschaumstoffe sowie insbesondere auch frei gestiegene Polyurethanschäume (Schaum kann ungehindert aufsteigen, kein Formschaum) unter Verwendung von Polyolefin-Polyolen (insbesondere Polybutadien-Polyolen) überraschend einfach hergestellt werden, wobei Schäume mit guter, stabiler und homogener Schaumstruktur resultieren. Sowohl die Steigzeit bei der Produktion des Schaumes als auch die Zellfeinheit des resultierenden Schaumes liegen bei dem erfindungsgemäßen Verfahren in einem Bereich, der für die Produktion industrieller Polyurethan-Weichschäume auf Basis von Polyether-Polyol typisch ist. Es kann dabei ohne weiteres auf die kommerziell verfügbaren Polyolefin-Polyole zurückgegriffen werden.

Das erfindungsgemäße Verfahren hat außerdem den Vorteil, dass die erfindungsgemäß einzusetzenden Additivzusammensetzungen auch in Kombination mit herkömmlichen Stabilisatoren eingesetzt werden können.

Das erfindungsgemäße Verfahren, die erfindungsgemäß einzusetzenden Additivzusammensetzungen sowie deren Verwendung werden nachfolgend anhand von vorteilhaften Ausführungsformen genauer beschrieben. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen durch Gelpermeationschromatographie (GPC) und die Bestimmung der Struktur der eingesetzten Verbindungen durch NMR-Methoden, insbesondere durch ¹³C- und ²⁹Si-NMR bestimmt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Sind nachfolgend Messwerte angegeben, so sind diese Messungen, wenn nicht anders angegeben bei Normalbedingungen (25 °C und 1013 mbar) durchgeführt worden.

In dem erfindungsgemäßen Verfahren werden Polyolefinpolyole eingesetzt, Solche sind dem Fachmann an sich bekannt und auch kommerziell verfügbar. Das Polymerrückgrat eines Polyolefinpolyols ist typischerweise das polymerisierte Produkt eines Olefinmonomers oder, was auch möglich ist, eines Olefinmonomers und eines vinylaromatischen Monomers. Das Olefinmonomer enthält in der Regel 2 bis 12 Kohlenstoffatome. Vorzugsweise ist das Olefinmonomer ein Dien mit 4 bis 10 Kohlenstoffatomen, stärker bevorzugt 4 bis 6 Kohlenstoffatomen, noch stärker bevorzugt handelt es sich um Butadien oder Isopren, insbesondere aber um 1,3-Butadien.
Das potentiell einsetzbare vinylaromatische Monomer ist vorzugsweise ein monovinylaromatisches Monomer, wie z.B. Styrol oder alkylsubstituiertes Styrol, worin der Alkylsubstituent bzw. die Alkylsubstituenten vorzugsweise 1 bis 3 Kohlenstoffatome aufweist bzw. aufweisen. Besonders bevorzugt ist das vinylaromatische Monomer Styrol oder monoalkylsubstituiertes Styrol. Das erfindungsgemäß einzusetzende Polyolefinpolyol kann gewünschtenfalls bis zu 50 Gew.-% polymerisiertes vinylaromatisches Monomer enthalten, z.B. 0,01 bis 20 Gew.-%, insbesondere 0 bis 5 Gew.-%. Nach einer weiteren bevorzugten Ausführungsform der Erfindung enthält das Polyolefinpolyol kein polymerisiertes vinylaromatisches Monomer.

Vorzugsweise enthält das Polyolefinpolyol weniger als 20%, z.B. 0,01 bis 10%, insbesondere weniger als 5% olefinische Doppelbindung im Polymerrückgrat. Der Begriff "olefinische Doppelbindung" soll solche Doppelbindungen nicht umfassen, die in etwaigen aromatischen Gruppen in dem Polymer vorliegt. Methoden zur Bestimmung einer olefinischen Doppelbindung sind dem Fachmann bekannt.

Das Polyolefinpolyol ist vorzugsweise ein Polydienpolyol, weiter bevorzugt ein Polydiendiol. Am meisten bevorzugt ist das Polyolefinpolyol ein Polydiendiol. Vorzugsweise weist das Polydienpolyol eine Funktionalität im Bereich von 1,5 bis 3 Hydroxylgruppen pro Molekül auf, z.B. im Bereich von 1,8 bis 2,6, weiter bevorzugt im Bereich von 1,9 bis 2,5.

Das Polymerrückgrat des Polydienpolyols ist vorzugsweise das hydrierte polymerisierte Produkt von konjugierten Dienmonomeren mit einem Gehalt an vorzugsweise 4 bis 10 Kohlenstoffatomen, vorteilhafterweise 4 bis 6 Kohlenstoffatomen, weiter bevorzugt Butadien oder Isopren, insbesondere 1,3-Butadien. Vorzugsweise kann ein hydriertes Polybutadienpolyol verwendet werden, das insbesondere eine 1,2-Addition von 15 bis 70% aufweist, um die Viskosität und eine anschließende Kristallisation zu minimieren. Das Polydienpolyol, das bevorzugt in der vorliegenden Erfindung einsetzbar ist, kann insbesondere auf anionischem Wege hergestellt werden, wie z.B. in den US-Patenten 5,376,745, 5,391,663, 5,393,843, 5,405,911, 5,416,168 und 5,874,484 beschrieben.

Das Polydienpolyol wird vorzugsweise derart hydriert, daß wenigstens 90%, stärker bevorzugt wenigstens 95% der olefinischen Kohlenstoff-KohlenstoffDoppelbindungen in dem Polydien abgesättigt werden. Die Hydrierung dieser Polymere kann nach einer Vielzahl bekannter Verfahren vorgenommen werden, einschließlich Hydrierung in Gegenwart solcher Katalysatoren wie Raney-Nickel, Edelmetalle, wie Platin und Palladium, lösliche Übergangsmetallkatalysatoren und Titankatalysatoren, wie im US-Patent 5,039,755 beschrieben.

Das Polybutadienpolymer weist vorzugsweise keine unter etwa 15% liegende 1,2-Butadienaddition auf.

Wenn Isopren als konjugiertes Dien für die Herstellung des Polydienpolyols verwendet wird, hat das Isoprenpolymer vorzugsweise nicht weniger als 80% 1,4-Isoprenaddition, um die Tg und die Viskosität zu verringern. Die Dienmikrostrukturen werden typisch durch ¹³C-Kernmagnetresonanz (NMR) in Chloroform bestimmt.

Für die Polydienpolyole werden geeignete zahlenmittlere Molekulargewicht vorzugsweise von 500 bis 20.000, stärker bevorzugt 1.000 bis 15.000, am meisten bevorzugt von 2.000 bis 5.000 betragen. Die zuvor angeführten zahlenmittleren Molekulargewichte sind durch Gelpermeationschromatographie (GPC) bestimmte zahlenmittlere Molekulargewichte, wobei die Eichung mit Polybutadienstandards mit bekannten zahlenmittleren Molekulargewichten erfolgte. Das Lösungsmittel für die GPC-Analysen ist Tetrahydrofuran.

Besonders bevorzugte Polyolefin-Polyole sind ausgewählt aus Polybutadien-Polyolen, vorzugsweise Poly-1,3-butadien-Polyolen, hydrierten Polybutadien-Polyolen und/oder Polyisopren-Polyolen.

Bevorzugte erfindungsgemäß einsetzbare Polyolefin-Polyole genügen den folgenden Formeln (π) oder (Λ) 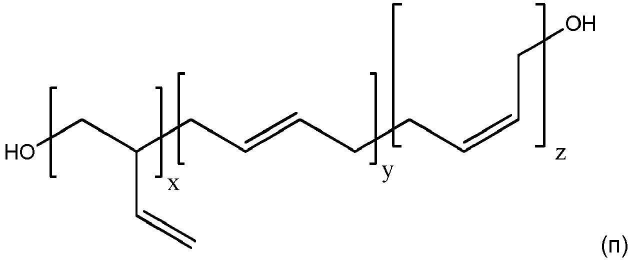 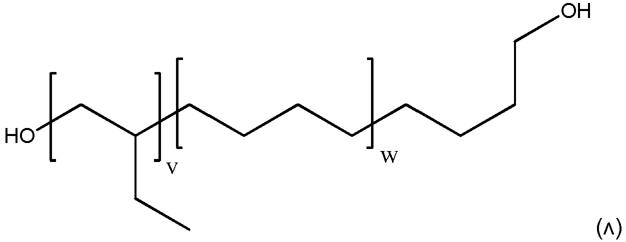 wobei die Buchstaben v bis x die Anteile der Struktureinheiten in Relation zueinander bezeichnen und folgende Werte haben:
x= 10 bis 70%,
y= 15 bis 70 %,
z= 10 bis 30%,
v = 10 bis 75 %,
w= 25 bis 90 %,
wobei x+y+z=100%,
sowie
v+w=100%.

Polyolefin-Polyole gemäß den Formeln +(π) oder (Λ) sind auch kommerziell verfügbar, beispielsweise von der Firma Cray Valley, Frankreich, z.B. das Polybutadienpolyol Poly bd® R-45HTLO. Sie können vorteilhafterweise in dem erfindungsgemäßen Verfahren eingesetzt werden.

Die im erfindungsgemäßen Verfahren einzusetzende Additivzusammensetzung, zeichnet sich vorzugsweise dadurch aus, dass sie
a) optional mindestens ein ionisches Tensid A, ausgewählt aus solchen der Formeln (I)

   A⁻M⁺ (I)

   mit A⁻ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und M⁺ = Kation, welches kein Ammoniumkation ist, vorzugsweise Metallkation, bevorzugt Alkalimetallkation und besonders bevorzugt Kalium- oder Natriumkation,
   und
b) mindestens ein ionisches Tensid B, ausgewählt aus einer quaternisierten Ammoniumverbindung,
   sowie
c) mindestens eine tertiäre Aminverbindung C, die kein Oxazasilinan ist und eine Molmasse von mindestens 150 g/mol, bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
   und
d) mindestens ein Oxazasilinan D,
enthält.

Die erfindungsgemäß einzusetzende Additivzusammensetzung enthält mindestens ein ionisches Tensid B, ausgewählt aus einer quaternisierten Ammoniumverbindung, sowie mindestens eine tertiäre Aminverbindung C, die kein Oxazasilinan ist und eine Molmasse von mindestens 150 g/mol aufweist.

Die erfindungsgemäß einzusetzende Additivzusammensetzung enthält mindestens ein ionisches Tensid B, ausgewählt aus einer quaternisierten Ammoniumverbindung, sowie mindestens eine tertiäre Aminverbindung C, die kein Oxazasilinan ist und eine Molmasse von mindestens 150 g/mol aufweist, sowie mindestens ein Oxazasilinan D.

Vorzugsweise ist das Tensid B ausgewählt aus einer Imidazolium-Verbindung, einer Pyridiniumverbindung oder einer Verbindung der Formel (IIa) bis (IIc)

NR²ₓR³₄₋ₓ⁺ X⁻ (IIa)

R^{1'}R^{2'}R^{3'}R^{4'}N⁺X⁻ (IIb)

R^{1'}R^{2'}N⁺=CR^{3'}R^{4'}X⁻ (IIc)

mit x = 0 bis 4, vorzugsweise 1 bis 3, bevorzugt 2 oder 3, X⁻ = Anion, R² = gleiche oder verschiedene, vorzugsweise gleiche Alkylreste mit 1 bis 3 Kohlenstoffatomen, vorzugsweise zwei Kohlenstoffatomen und bevorzugt einem Kohlenstoffatom, R³ = gleiche oder verschiedene gegebenenfalls Doppelbindungen enthaltende Kohlenwasserstoffreste mit 5 bis 30, vorzugsweise 8 bis 20 Kohlenstoffatomen, Arylreste, Alkylarylreste oder alkoxylierte Kohlenwasserstoffreste, Polyetherreste der Formel (VI)

-(CH₂)_{y}-O-(C₂H₄O)ₒ-(C₃H₆O)ₚ-OH (VI)

mit o und p unabhängig voneinander 0 bis 100, vorzugsweise 0 bis 50, wobei die Summe aus o + p jeweils größer 0 ist und y gleich 2 bis 4, vorzugsweise 2,
R^{1'},R^{2'},R^{3'},R^{4'} gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome, insbesondere Sauerstoff, NH, NR' mit R' gleich einem gegebenenfalls Doppelbindungen enthaltenden C₁-C₃₀-Alkylrest, insbesondere -CH₃, unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R^{5'}-O)ₙ-R^{6'} bedeuten,
   wobei
R^{5'} ein 2 bis 4 Kohlenstoffatome enthaltender linearer oder verzweigter Kohlenwasserstoffrest,
n 1 bis 100, vorzugsweise 2 bis 60, ist und
R^{6'} Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R^{7'} mit R^{7'} gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen für das Tensid B kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (VII), (VIII) und (IX) beschreiben, wobei die heterocyclischen Ringe gegebenenfalls auch mehrere Hetereoatome enthalten können 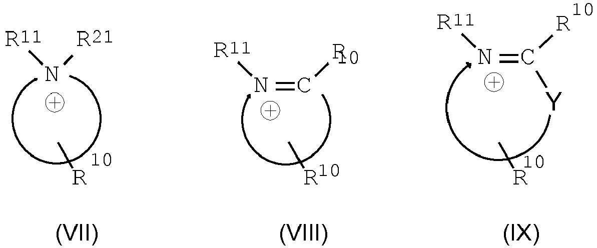 worin
R¹⁰ gleich oder unterschiedlich ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist, R¹¹ und R¹² die für R^{1'} und R^{2'} genannte Bedeutung haben,
Y ein Sauerstoffatom oder ein substituiertes Stickstoffatom (Y = O,NR^{1a}) ist,
R^{1a} Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(CH₃)N-C(O)-, -(O)C-N(CH₃)-, -S(O₂)-O-, -O-S(O₂)-,-S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R^{5'}-O)ₙ-R^{6'} bedeuten.

Beispiele für cyclische Stickstoffverbindungen der vorgenannten Art sind Pyrrolidin, Dihydropyrrol, Pyrrol, Imidazolin, Oxazolin, Oxazol, Isoxazol, Indol, Carbazol, Piperidin, Pyridin, die isomeren Picoline und Lutidine, Chinolin und iso-Chinolin. Die cyclischen Stickstoffverbindungen der allgemeinen Formeln (VII), (VIII) und (IX) können unsubstituiert (R¹⁰ = H), einfach oder auch mehrfach durch den Rest R¹⁰ substituiert sein, wobei bei einer Mehrfachsubstitution durch R¹⁰ die einzelnen Reste R¹⁰ unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazolin und seinen Alkyl- und Phenylderivaten abgeleitete Kationen haben sich als Bestandteil bewährt.

Als Kationen kommen ferner Ionen in Betracht, welche zwei Stickstoffatome enthalten und durch die allgemeine Formel (X) wiedergegeben sind 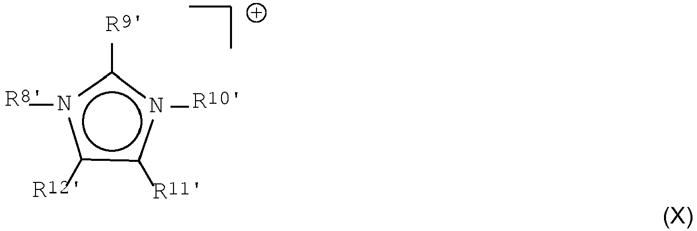 in denen
R^{8'},R^{9'},R^{10'},R^{11'},R^{12'} gleich oder unterschiedlich sein können und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R^{5'}-O)ₙ-R^{6'} bedeuten, wobei R^{5'},n und R^{6'} wie oben definiert sind.

Die Anionen X⁻ im Tensid B sind vorzugsweise ausgewählt aus der Gruppe der Halogenide, Nitrate, Sulfate, Hydrogensulfate, Alkyl- und Arylsulfate, Polyethersulfate und -sulfonate, Sulfonate, Alkyl- und Arylsulfonate, Alkyl- und Arylcarboxylate, Saccharinate, Polyetherphosphate und Phosphate.

Als Anionen X⁻ weisen die erfindungsgemäß einsetzbaren Tenside B bevorzugt ein Chlorid-, Phosphat- oder Methylsulfat-Anion, vorzugsweise ein Methylsulfat-Anion auf.

Die erfindungsgemäß einzusetzende Additivzusammensetzung enthält mindestens ein Oxazasilinan. Als Oxazasilinan enthält die erfindungsgemäße Zusammensetzung vorzugsweise 2,2,4-Trimethyl-1,4,2-oxazasilinan (Formel (III))

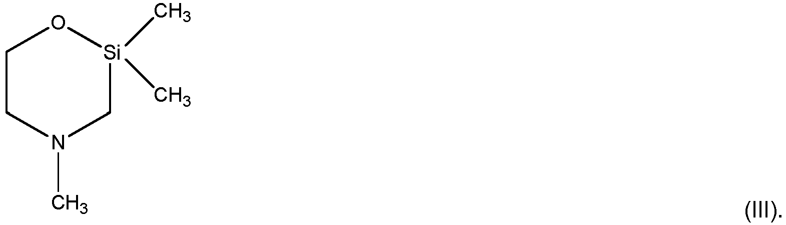

Es entspricht einer bevorzugten Ausführungsform der Erfindung, wenn die erfindungsgemäß einzusetzende Additivzusammensetzung mindestens eine tertiäre Aminverbindung C, die kein Oxazasilinan ist und eine Molmasse von mindestens 150 g/mol, aufweist sowie außerdem mindestens ein Oxazasilinan.

Vorzugsweise ist das Tensid A ausgesucht aus solchen der Formel (Ia)

R¹-SO3⁻ M⁺ (la)

mit R¹ = organischer Rest, insbesondere Kohlenwasserstoffrest oder -O-Kohlenwasserstoffrest, bevorzugt R¹ = gesättigte oder ungesättigte Kohlenwasserstoffreste mit 5 bis 30, vorzugsweise 8 bis 20 Kohlenstoffatomen, Arylreste oder Alkylarylreste, und M⁺ = Kation, vorzugsweise Alkalimetallkation, bevorzugt Natriumkation. Bevorzugte ionische Tenside A sind z. B. solche der Formeln (Ib) bis (Id)

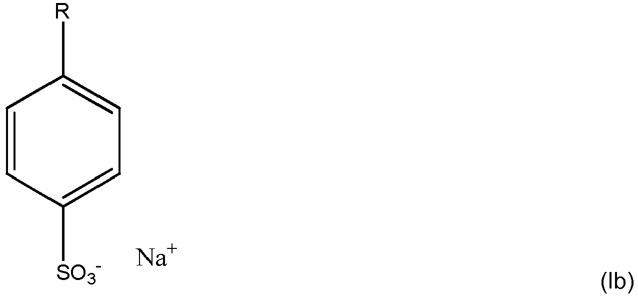

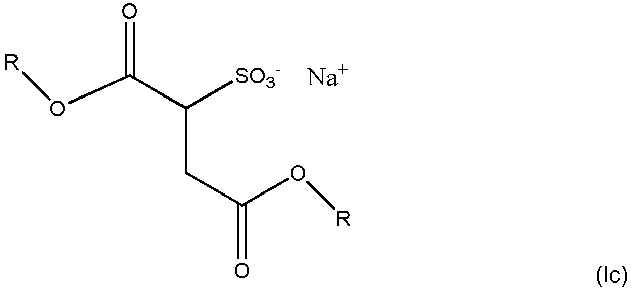

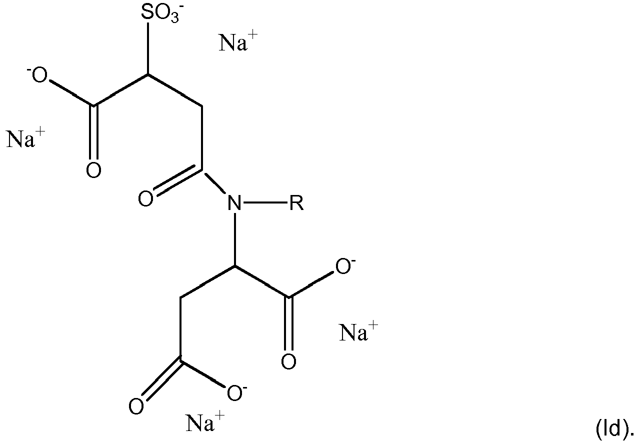

Bevorzugte ionische Tenside B sind insbesondere Imidazolium-Verbindungen, besonders bevorzugt solche der Formel (IV)

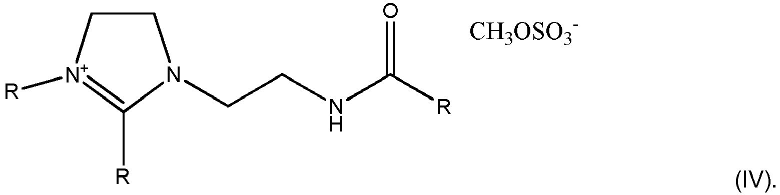

Die Reste R in den Formeln (Ib) bis (Id) und (IV) können gleiche oder unterschiedliche, gesättigte oder ungesättigte, gegebenenfalls alkoxylierte Kohlenwasserstoffreste mit 1 bis 30, vorzugsweise 1 bis 20 Kohlenstoffatomen, sein.

Die erfindungsgemäß einsetzbaren Amine C sind vorzugsweise nicht ionisch, weisen also keine elektrische Ladung auf. Bevorzugte Amine C sind z. B. solche der Formel (V) 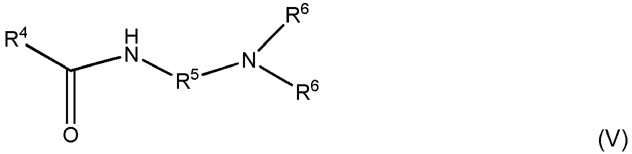 mit
R⁴= gesättigte oder ungesättigte Kohlenwasserstoffreste mit 5 bis 30, vorzugsweise 8 bis 20 Kohlenstoffatomen,
R⁵ = zweiwertiger Alkylrest mit 2 oder 3 Kohlenstoffatomen,
R⁶ = gleiche oder verschiedene, vorzugsweise gleiche Alkylreste mit 1 bis 3 Kohlenstoffatomen, bevorzugt Methylreste.

Besonders bevorzugt als Amin C ist ein Dimethylaminopropyl-Cocossäureamid.

Die Menge an Amin C wird vorzugsweise so gewählt, dass 0,001 bis 5 Gew.-Teile, insbesondere 0,2 bis 3 Gew.-Teile Amin C pro 100 Gew.-Teilen des insgesamt eingesetzten Polyol eingesetzt werden.

In der erfindungsgemäß einzusetzenden Additivzusammensetzung beträgt das Massenverhältnis der Summe aller Tenside A und B zur Summe aller Amine C vorzugsweise von 20 zu 1 bis 1:10, bevorzugt 10 : 1 bis 1:10 und besonders bevorzugt von 5 : 1 bis 1 zu 5.

Enthält die erfindungsgemäß einzusetzende Additivzusammensetzung ein oder mehrere Oxazasilinane D, so beträgt das Massenverhältnis der Summe aller Amine C zur Summe aller Oxazasilinane D vorzugsweise von 500 zu 1 bis 1:1, bevorzugt von 200 : 1 bis 5:1 und besonders bevorzugt von 50 : 1 bis 10 zu 1. Als Oxazasilinan enthält die erfindungsgemäß einzusetzende Additivzusammensetzung vorzugsweise 2,2,4-Trimethyl-1,4,2-oxazasilinan Formel (III)

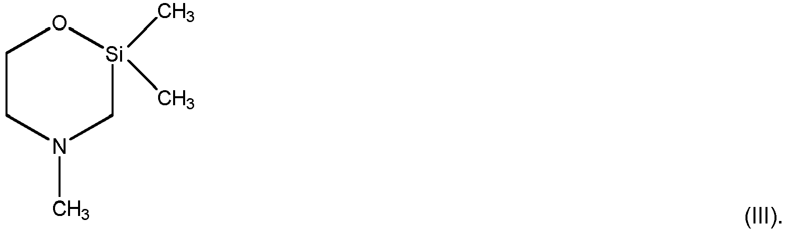

Die erfindungsgemäß einzusetzende Additivzusammensetzung kann als solche oder in Kombination mit anderen zur Herstellung von Polyurethanschäumen eingesetzten Substanzen verwendet werden.

Neben den einsetzbaren Komponenten A bis D kann die erfindungsgemäß einzusetzende Additivzusammensetzung demgemäß eine oder mehrere weitere, bei der Herstellung von Polyurethanschäumen verwendbare Substanzen, ausgewählt aus Nukleierungsmitteln, Stabilisatoren, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, enthalten. Es kann vorteilhaft sein, wenn die erfindungsgemäß einzusetzende Additivzusammensetzung ein oder mehrere Lösungsmittel, vorzugsweise ausgewählt aus Glykolen, Alkoxylaten oder Ölen synthetischer und/oder natürlicher Herkunft, enthält.

Bevorzugt werden im erfindungsgemäßen Verfahren als Polyolkomponenten Mischungen von Polyolen eingesetzt, die mindestens 25 Gew.-%, bevorzugt 50 bis 100 Gew.-%, z.B. ≥ 75 Gew.-% an Polyolen aufweisen, die auf Polyolefin (insbesondere Polybutadien) basieren, bezogen auf die Summe der vorhandenen Polyole. Es entspricht einer weiteren bevorzugten Ausführungsform der Erfindung wenn als Polyolkomponente außschließlich Polyolefin-Polyol eingesetzt wird.

Die Menge an Additivzusammensetzung wird vorzugsweise so gewählt, daß 0,001 bis 10 Gew.-Teile, insbesondere 0,2 bis 5 Gew.-Teile der Additivzusammensetzung pro 100 Gew.-Teilen des insgesamt eingesetzten Polyol eingesetzt werden.

Die Menge an Additivzusammensetzung kann vorzugsweise so gewählt werden, dass das Massenverhältnis aller eingesetzter Polyolkomponenten zur Summe aller eingesetzten Amine C von 2000 zu 1 bis 10 zu 1, bevorzugt von 1000 zu 1 bis 20 zu 1 und besonders bevorzugt von 250 zu 1 bis 50 zu 1 beträgt.

Es entspricht einer bevorzugten Ausführungsform der Erfindung, wenn in dem erfindungsgemäßen Verfahren eine Additivzusammensetzung eingesetzt wird, die zumindest 2 Komponenten umfasst, nämlich
(i) als tertiäre Aminverbindung C, die eine Molmasse von mindestens 150 g/mol aufweist, zumindest eine Verbindung der Formel (V) 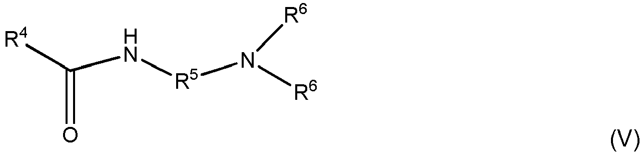 mit
   R⁴= gesättigte oder ungesättigte Kohlenwasserstoffreste mit 5 bis 30, vorzugsweise 8 bis 20 Kohlenstoffatomen,
   R⁵ = zweiwertiger Alkylrest mit 2 oder 3 Kohlenstoffatomen,
   R⁶ = gleiche oder verschiedene, vorzugsweise gleiche Alkylreste mit 1 bis 3 Kohlenstoffatomen, bevorzugt Methylreste,
   und zwar insbesondere Dimethylaminopropyl-Cocossäureamid,
(ii) als mindestens ein ionisches Tensid B, ausgewählt aus einer quaternisierten Ammoniumverbindung, zumindest eine Imidazolium-Verbindung, insbesondere eine Imidazolium-Verbindung der Formel (IV), 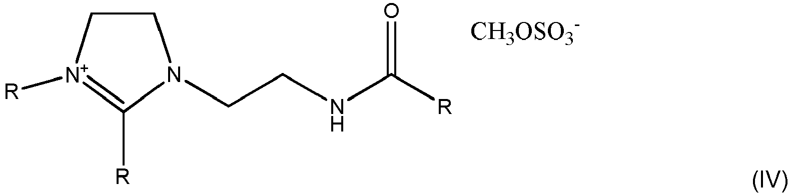 mit R gleiche oder unterschiedliche, gesättigte oder ungesättigte, gegebenenfalls alkoxylierte Kohlenwasserstoffreste mit 1 bis 30 Kohlenstoffatomen,
wobei als Polyolkomponente eine Polyolmischung eingesetzt wird, welche mindestens 25 Gew. %, vorzugsweise mindestens 50 Gew.-%, vorteilhafterweise mindestens 75 Gew.-%, inbesondere 100 Gew.-% Polyolefin-Polyol bezogen auf die gesamte eingesetzte Menge Polyol enthält.

Es entspricht einer besonders bevorzugten Ausführungsform der Erfindung, wenn in dem erfindungsgemäßen Verfahren eine Additivzusammensetzung eingesetzt wird, die zumindest 3 Komponenten umfasst, nämlich
(i) als tertiäre Aminverbindung C, die eine Molmasse von mindestens 150 g/mol aufweist, zumindest eine Verbindung der Formel (V) 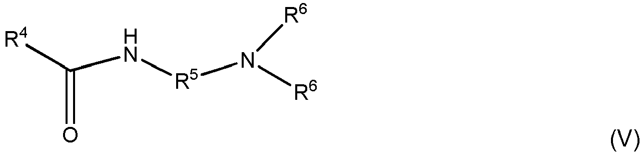 mit
   R⁴= gesättigte oder ungesättigte Kohlenwasserstoffreste mit 5 bis 30, vorzugsweise 8 bis 20 Kohlenstoffatomen,
   R⁵ = zweiwertiger Alkylrest mit 2 oder 3 Kohlenstoffatomen,
   R⁶ = gleiche oder verschiedene, vorzugsweise gleiche Alkylreste mit 1 bis 3 Kohlenstoffatomen, bevorzugt Methylreste,
   und zwar insbesondere Dimethylaminopropyl-Cocossäureamid,
(ii) als mindestens ein ionisches Tensid B, ausgewählt aus einer quaternisierten Ammoniumverbindung, zumindest eine Imidazolium-Verbindung, insbesondere eine Imidazolium-Verbindung der Formel (IV), 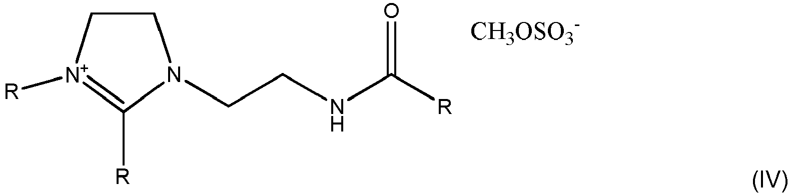 mit R gleiche oder unterschiedliche, gesättigte oder ungesättigte, gegebenenfalls alkoxylierte Kohlenwasserstoffreste mit 1 bis 30 Kohlenstoffatomen,
(iii) mindestens ein Oxazasilinan, und zwar insbesondere 2,2,4-Trimethyl-1,4,2-oxazasilinan Formel (III) 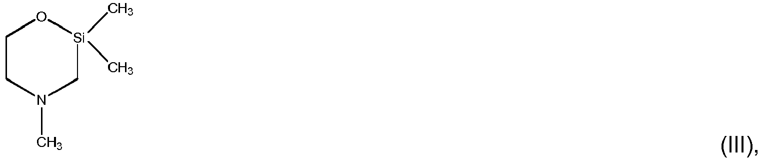 wobei als Polyolkomponente eine Polyolmischung eingesetzt wird, welche mindestens 25 Gew. %, vorzugsweise mindestens 50 Gew.-%, vorteilhafterweise mindestens 75 Gew.-%, inbesondere 100 Gew.-% Polyolefin-Polyol bezogen auf die gesamte eingesetzte Menge Polyol enthält.

Es entspricht einer besonderen Ausführungsform der Erfindung, wenn in dem erfindungsgemäßen Verfahren keine Fettsäureestersulfate zum Einsatz gelangen.

Vorzugsweise wird der PU-Schaum dadurch erzeugt, dass eine Mischung enthaltend zumindest einen Urethan- und/oder Isocyanurat-Katalysator, zumindest ein Treibmittel und/oder Wasser, zumindest eine Isocyanatkomponente und eine Polymischung enthaltend ein Polyolefin-Polyol (insbesondere Polybutadien-Polyol) in Gegenwart der erfindungsgemäßen Additivzusammensetzung verschäumt wird.

Neben den genannten Komponenten kann die Mischung weitere Bestandteile aufweisen, wie z. B. optional (weitere) Treibmittel, optional Präpolymere, optional Flammschutzmittel und optional weitere Additive (die von den in der erfindungsgemäßen Additivzusammensetzung genannten verschieden sind), wie z. B. Füllstoffe, Emulgatoren, Emulgatoren, die auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat, Polyol, Präpolymer, Stabilisatoren, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben: EP 0152878 A1, EP 0409035 A2, DE 102005050473 A1, DE 19629161 A1, DE 3508292 A1, DE 4444898 A1, EP 1061095 A1, EP 0532939 B1, EP 0867464 B1, EP1683831 A1 und DE102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Weitere Tenside, die bei der Herstellung von Polyurethanweichschaumstoffen eingesetzt werden, können z. B. ausgewählt sein aus der Gruppe umfassend nichtionische Tenside und/oder amphotere Tenside.

Als Tenside können erfindungsgemäß auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Schaumstabilisatoren können vorzugsweise jene eingesetzt werden, die aus dem Stand der Technik bekannt sind und auf die auch üblicherweise zur Polyurethanschaumstabilisierung zurückgegriffen wird. Gemäß Stand der Technik werden die zur Polyurethanschaumstabilisierung verwendbaren Polysiloxan-Polyoxyalkylen-Blockmischpolymerisate häufig durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1 520 870 beschrieben, hergestellt. Die Hydrosilylierung kann batchweise oder kontinuierlich, wie beispielsweise in der DE 198 59 759 C1 beschrieben, durchgeführt werden.

Ein Vielzahl weiterer Schriften, wie beispielsweise die EP 0 493 836 A1, US 5,565,194 oder EP 1 350 804 offenbaren jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen.

Als Biozide können handelsübliche Produkte verwendet werden, wie Chlorophen, Benzisothiazolinon, Hexahydro-1,3,5-tris(hydroxyethyl-s-triazin), Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Oftmals werden alle Komponenten außer den Polyolen und Isocyanaten vor dem Verschäumen zu einer Aktivatorlösung vermischt. Diese enthält dann vorzugsweise u.a. die erfindungsgemäß verwendbare Additivzusammensetzung, Stabilisatoren, Katalysatoren bzw. Katalysatorkombination, das Treibmittel, beispielsweise Wasser, sowie eventuell weitere Additive, wie Flammschutz, Farbe, Biozide etc, je nach Rezeptur des Polyurethanweichschaumstoffs. Auch eine solche Aktivatorlösung kann eine erfindungsgemäße Zusammensetzung sein.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 7,5 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 20 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, UV-Stabilisatoren, Farbstoffe, Biozide, Pigmente, Zellöffner, Vernetzer und dergleichen.

Zur Herstellung eines Polyurethanweichschaumstoffs wird vorzugsweise ein Gemisch (Mischung) aus Polyol umfassend Polyolefin-Polyol (insbesondere Polybutadien-Polyol), di- oder polyfunktionellem Isocyanat, erfindungsgemäßer Additivzusammensetzung, Aminkatalysator, Kalium-, Zink- und/oder Zinnorganischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt. Ein solches Gemisch stellt ebenfalls einen Gegenstand der Erfindung dar. Ein Gemisch, umfassend die erfindungsgemäß einzusetzende Additivzusammensetzung und Polyol umfassend Polyolefin-Polyol, stellt ebenfalls einen Gegenstand der Erfindung dar sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-lsocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder so genannte Präpolymere.

Es können TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in den Patentschriften DE 444898 und EP 1095968 aufgeführt, auf die hier im vollen Umfang Bezug genommen wird.

Als Vernetzer werden niedermolekulare, gegenüber Isocyanaten reaktive mehrfunktionelle Verbindungen bezeichnet. Geeignet sind Hydroxyl- oder Aminterminierte Substanzen, wie Glycerin, Triethanolamin (TEOA), Diethanolamin (DEOA) und Trimethylolpropan. Die Einsatzkonzentration liegt üblicherweise zwischen 0,1 und 5 Teilen, bezogen auf 100,0 Teile Polyol je nach Formulierung, kann aber auch davon abweichen. Bei Verwendung von MDI mit einer Funktionalität f >2 bei der Formverschäumung übernimmt dies ebenfalls eine vernetzende Funktion. Der Gehalt an niedermolekularen Vernetzern kann daher bei steigender Menge an entsprechendem MDI reduziert werden.

Die erfindungsgemäßen Zusammensetzungen können in der Blockverschäumung eingesetzt werden. Es können alle dem Fachmann bekannten Verfahren zur Herstellung von frei gestiegenen Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäß einsetzbaren Additivzusammensetzungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Neben den Polyolkomponenten auf Basis von Polyolefin-Polyol (insbesondere Polybutadien-Polyol), können als weitere Polyolkomponenten alle bekannten Polyolverbindungen in der Mischung optional enthalten sein.

Es kann sich hierbei z. B. um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, dass 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3- Propylenoxid, 1,2- bzw. 2,3- Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden. Die Polyetherpolyole, vorzugsweise Polyoxypropylenpolyoxyethylen-polyole besitzen eine Funktionalität von 2 bis 8 und zahlengemittelte Molekulargewichte im Bereich von 500 bis 8000, vorzugsweise 800 bis 4500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von hochelastischen PolyurethanWeichschaumstoffen (Kaltschaum) zwei- und/oder dreifunktionelle Polyetheralkohole eingesetzt, die, bevorzugt über 50 mol-% bezogen auf die Summe der Hydroxylgruppen, an primären Hydroxylgruppen, aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht.

Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man verwendet unter anderem:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können in der Mischung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N,N-Dimethylhexadecylamin, Oxazasilinan, N-Ethylmorpholin, Tris(dimethylaminopropyl)hexahydro-1,3,5-triazin, N,N-Dimethylaminoethanol, Dimethylaminoethoxyethanol und Bis(dimethylaminoethyl)ether, Zinkverbindungen bzw. -salze, Zinnverbindungen bzw. -salze, bevorzugt Zinnricinolat, und Kaliumsalze wie Kaliumacetat und Kalium-2-ethylhexanoat. Bevorzugt werden als Katalysatoren solche eingesetzt, die Zinnricinolat und/oder N,N-Dimethylhexadecylamin aufweisen.

Geeignete Einsatzmengen richten sich nach dem Typ des Katalysators und liegen üblicherweise im Bereich von 0,02 bis 5 pphp (= Gewichtsteilen bezogen auf 100 Gewichtsteile Polyol).

Mittels des erfindungsgemäßen Verfahrens ist ein Polyurethanschaum, insbesondere ein Polyurethanweichschaum erhältlich. Dieser Polyurethanschaum mit einer Dichte kleiner als 100 kg/m³ entspricht einem weiteren Gegenstand der vorliegenden Erfindung. Der betreffende Polyurethanschaum zeichnet sich insbesondere dadurch aus, dass die zur Herstellung verwendete Polyolkomponente zumindest teilweise auf Polyolefin (insbesondere Polybutadien) basiert. Die Dichte des erfindungsgemäßen Polyurethanschaums ist vorzugweise kleiner als 50 kg/m³.

Mit dem erfindungsgemäßen Polyurethanschaum sind Artikel zugänglich die diesen Polyurethanschaum enthalten oder aus ihm bestehen. Diese Artikel stellen einen weiteren Gegenstand dieser Erfindung dar. Solche Artikel können z. B. Möbelpolster oder Matratzen sein.

Ein weiterer Gegenstand dieser Erfindung ist außerdem eine Zusammensetzung geeignet zur Herstellung von Polyurethanschäumen, welche eine Mischung aus Polyol und einer Additivzusammensetzung, wie zuvor beschrieben umfasst, wobei bezogen auf die gesamte Menge Polyol mindestens 15 Gew. %, vorzugsweise mindestens 50 Gew.-%, vorteilhafterweise mindestens 75 Gew.-% oder mindestens 80 Gew.-%, insbesondere mindestens 90 Gew.-% oder 95 Gew.-% Polyolefin-Polyol enthalten sind. Eine solche erfindungsgemäße Zusammensetzung kann insbesondere nur die Additivzusammensetzung und das Polyolefin-Polyol enthalten. Die Additivzusammensetzung ist in dem Polyolefin-Polyol ohne weiteres lösbar.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente, wobei bezogen auf die gesamte Menge Polyol mindestens 15 Gew. % Polyolefin-Polyol enthalten sind.

Eine bevorzugte erfindungsgemäße Zusammensetzung zur Herstellung von Polyurethanschaum kann Polyol in Mengen von 25 bis 80 Gew.-%, Wasser in Mengen von 1 bis 5 Gew.-%, Katalysator in Mengen von 0,05 bis 1 Gew.-%, physikalisches Treibmittel in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) in Mengen von 0,2 bis 5 Gew.-%, Isocyanat in Mengen von 20 bis 50 Gew.% und die erfindungsgemäß einzusetzende Additivzusammensetzung in Mengen von 0,001 bis 10 Gew.-%, vorzugsweise 0,1 bis 5 Gew-%, enthalten, wobei bezogen auf die gesamte Menge Polyol mindestens 15 Gew. %, vorzugsweise mindestens 50 Gew.-%, insbesondere mindestens 75 Gew.-% Polyolefin-Polyol enthalten sind.

Bezüglich bevorzugter Ausführungsformen dieser vorgenannten Zusammensetzungen wird ausdrücklich auf die vorangegangene Beschreibung verwiesen.

Ein weiterer Gegenstand der vorliegenden Erfindung ist die Verwendung einer Additivzusammensetzung enthaltend
mindestens ein ionisches Tensid B, ausgewählt aus einer quaternisierten Ammoniumverbindung,
sowie
mindestens eine tertiäre Aminverbindung C, die kein Oxazasilinan ist und die eine Molmasse von mindestens 150 g/mol aufweist, sowie
mindestens ein Oxazasilinan D,
zur Herstellung von Polyurethanschäumen mit einer Dichte < 100 kg/m³ durch Umsetzung einer oder mehrerer Polyolkomponenten mit einer oder mehrerer Isocyanatkomponenten, wobei mindestens 15 Gew. % Polyolefin-Polyol bezogen auf die gesamte eingesetzte Menge Polyol eingesetzt werden.

Bezüglich bevorzugter Ausführungsformen dieser vorgenannten Verwendung wird ausdrücklich auf die vorangegangene Beschreibung verwiesen.

### Beispiele

### Herstellung der Polyurethanschäume

Zur Herstellung der Polyurethanschäume wurden jeweils 400 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Katalysator (Amin(e) und/oder die Zinnverbindung), Stabilisator und erfindungsgemäße Additivzusammensetzung unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm x 27 cm) gegossen. Entstandene Polyurethanweichschäume wurden den nachfolgend beschriebenen anwendungstechnischen Tests unterzogen.

Zwei Rezepturen wurden zur Demonstration der vorliegenden Erfindung für Polyurethanweichverschäumungen verwendet. Beide Rezepturen sind durch Wasser getrieben und frei gestiegen (Schaum kann ungehindert aufsteigen; keine Formschäume). Die Wassermenge wurde mit 4,0 Teilen pro 100 Teile Polyolmischung gewählt. Aufgrund dieser Wassermenge kann ein Raumgewicht von etwa 25 kg/m³ erwartet werden. Somit ist die Formulierung hinsichtlich Raumgewicht und Wassermenge typisch für Polyurethanweichschaumqualitäten, die derzeit in der Industrie für Polyster- oder Matratzenanwendungen eingesetzt werden, abgesehen davon, dass die Industrie hierfür bis jetzt kein Polybutadien-Polyol einsetzt. Die beiden Rezepturen unterscheiden sich hinsichtlich der eingesetzten Menge an Polybutadien-Polyol. In Rezeptur 1 (Tabelle 1) wird ausschließlich Polybutadien-Polyol verwendet. In Rezeptur 2 (Tabelle 2) wird eine 1:1 Mischung aus Polybutadien-Polyol und Standard-Polyether-Polyol eingesetzt. Neben den Polyolkomponenten und dem Wasser sind noch Katalysatoren (Zinnkatalysator, 2 Aminkatalysatoren), ein Schaumstabilisator auf Silikonbasis (TEGOSTAB® BF 2370) und Toluylendiisocyanat enthalten. Verschiedene Additive wurden zugesetzt, um die Wirkung auf die Schaumbildung zu untersuchen. Jeweils als erstes wurde ein Referenzschaum ohne weitere Additive hergestellt.

**Tabelle 1: Rezeptur 1 (Angaben in Massenteilen)**

| | |
|---|---|
| 100 Teile | Polybutadienpolyol Poly bd® R-45HTLO (Cray Valley, France)^{*1} |
| 4,0 Teile | Wasser gesamt (bei Additiven mit Wassergehalt muss die zugesetzte Wassermenge entsprechend reduziert werden) |
| 1,0 Teile | Stabilisator TEGOSTAB® BF 2370 (Evonik Goldschmidt GmbH): Schaumstabilisator auf Silikonbasis |
| 0,2 Teile | TEGOAMIN®33 (Evonik Goldschmidt GmbH): Lösung von 33 % Triethylendiamin in Dipropyleneglycol |
| 0,2 Teile | TEGOAMIN® DMEA (Evonik Goldschmidt GmbH): N,N-Dimethylethanolamin |
| 0,6 Teile | KOSMOS®29 (Evonik Goldschmidt GmbH): Zinnoctoat |
| Variable | Erfindungsgemäßes Additiv |
| 48,0 | Isocyanat (Toluylendiisocyanat T80) (80% 2,4-Isomer, 20% 2,6-Isomer) (Bayer Material Science AG) <105> |

| | |
|---|---|
| *1 = Polybutadien-Polyol mit einer OH-Zahl von 47,1 mg KOH/g und einer mittleren OH-Funktionalität von 2,5 pro Molekül; Molmasse 2800 g/mol. | |

**Tabelle 2: Rezeptur 2 (Angaben in Massenteilen)**

| | |
|---|---|
| 50 Teile | Polybutadienpolyol Poly bd® R-45HTLO (Cray Valley, France)^{*1} |
| 50 Teile | Standard-Polyether-Polyol VORANOL® CP 3322 (Dow Chemical)^{*2} |
| 4,0 Teile | Wasser gesamt (bei Additiven mit Wassergehalt muss die zugesetzte Wassermenge entsprechend reduziert werden) |
| 1,0 Teile | Stabilisator TEGOSTAB® BF 2370 (Evonik Goldschmidt GmbH): Schaumstabilisator auf Silikonbasis |
| 0,2 Teile | TEGOAMIN®33 (Evonik Goldschmidt GmbH): Lösung von 33 % Triethylendiamin in Dipropyleneglycol |
| 0,2 Teile | TEGOAMIN® DMEA (Evonik Goldschmidt GmbH): N,N-Dimethylethanolamin |
| 0,6 Teile | KOSMOS®29 (Evonik Goldschmidt GmbH): Zinnoctoat |
| Variable | Erfindungsgemäßes Additiv |
| 48,0 | Isocyanat (Toluylendiisocyanat T80) (80% 2,4-Isomer, 20% 2,6-Isomer) (Bayer Material Science AG) <105> |

| | |
|---|---|
| *1 = Polybutadien-Polyol mit einer OH-Zahl von 47,1 mg KOH/g und einer mittleren OH-Funktionalität von 2,5 pro Molekül; Molmasse 2800 g/mol. *2 = Voranol® CP 3322, erhältlich bei der Firma Dow Chemical, hierbei handelt es sich um ein Polyethertriol mit der OH-Zahl 47 mg KOH/g. | |

Verwendete ionische Tenside:
Tensid 1: MARLON® AM 80, (Benzolsulfonsäure, C10-13-Alkylderivate, Natriumsalze, erhältlich bei Sasol), Wassergehalt: 8 Gew. %
Tensid 2: Petroleumsulfonat (Additiv Chemie Luers GmbH & Co Kg.)
Tensid 3: REWOQUAT® W 3690 (Evonik Goldschmidt GmbH, Imidazoliumverbindungen, 2-(C17- und C17-ungesättigte Alkyl)-1-[2-(C18- und C18-ungesättigte Amido)ethyl]-4,5-dihydro-1-methyl-, Methylsulfate >=75 bis <=77%; 2-Propanol, >=23 bis <=25%)

### Verwendetes tertiäres Amin:

Amin C: Tego Amid D5040 (Evonik Goldschmidt GmbH), Cocosfettsäureamidamin, statische Oberflächenspannung 0,5%ig in Wasser: 27,7 mN/m.

### Verwendetes Oxazasilinan:

2,2,4-Trimethyl-1,4,2-oxazasilinane (Apollo Scientific Ltd.), Wassergehalt: wasserfrei

### Anwendungstechnische Tests

Die hergestellten Schäume wurden anhand folgender physikalischer Eigenschaften bewertet:
a) Rücksacken des Schaumstoffes nach dem Ende der Steigphase (=Rückfall).
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe ist die Höhe des gebildeten, frei gestiegenen Schaums nach 3 Minuten.
c) Steigzeit
   Die Zeitspanne zwischen dem Ende des Mischens der Reaktionskomponenten und dem Abblasen des Polyurethanschaums.
d) Raumgewicht
   Die Bestimmung erfolgt, wie in ASTM D 3574 - 08 unter Test A beschrieben, durch Messung der Core Density.
e) Die Luftdurchlässigkeit des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
f) Zahl der Zellen pro cm (Zellzahl): Diese wird bestimmt entlang einer Linie durch Auszählen mit Hilfe einer Lupe, wobei der Mittelwert von 3 Messungen genommen wird.

### Ergebnisse der Verschäumungen:

Die Ergebnisse der anwendungstechnischen Tests für die verschiedenen Rezepturen und verwendeten Additive sind in Tabelle 3 und 4 wiedergegeben.

**Tabelle 3: Verschäumungsergebnisse bei Verwendung von 100 Gew. % Polybutadien-Polyol bezogen auf die Polyolgesamtmenge. (hergestellt gemäß Rezeptur 1 in Tabelle1)**

| Versuch | Additiv | Einsatzmenge [pphp] | Steigzeit [s] | Rückfall [cm] | Schaumhöhe [cm] | Raumgewicht [kg/m³] | Staudruck der Wassersäule [mm] | Zellzahl [1/cm] | Kommentar |
|---|---|---|---|---|---|---|---|---|---|
| 1 | Kein Additiv | - | 132 | - | < 5 cm | - | - | - | Kollaps |
| 2 | Marlon AM 80 | 0,84 | 147 | - | < 5 cm | - | - | - | Kollaps |
| 3 | Petroleumsulfonat | 0,84 | 153 | - | < 5 cm | - | - | - | Kollaps |
| 4 | Rewoquat W 3690 | 0,84 | 168 | - | < 5 cm | - | - | - | Kollaps |
| 5 | Tegoamid D5040 | 0,84 | 121 | -8,0 | 16,5 | Inhomogen, starke Verdichtung in der unteren Hälfte* | -* | Große Risse und Lunker* | Teilkollaps, Verdichtungen |
| 6 | Oxazasilinan | 0,025 | 103 | - | < 5 cm | - | - | - | Kollaps |
| 7 | Mischung aus Rewoquat W 3690, Tegoamid D5040, Oxazasilinan (49,25%, 49,25%, 1,50%) (erfindugsgemäße Additivzusammensetzung) | 1,7 | 145 | -0,1 | 27,5 | 24,2 | 40 | 15 | Offene, feinzellige und homogene Schaumstruktur |

| | | | | | | | | | |
|---|---|---|---|---|---|---|---|---|---|
| *= Eine Bestimmung der physikalischen Parameter Raumgewicht, Luftdurchlässigkeit und Zellzahl ist bei einer inhomogenen Verteilung über den Probenkörper nicht sinnvoll. Bei einem Teilkollaps des sich bildenden Polyurethanweichschaums kommt es zu starken Verdichtungen in der Bodenzone. [pphp] = Gew.-Teile pro 100 Gew.-Teile Polyol | | | | | | | | | |

**Tabelle 4: Verschäumungsergebnisse bei Verwendung von 50 Gew. % Polybutadien-Polyol bezogen auf die Polyolgesamtmenge. (hergestellt gemäß Rezeptur 2 in Tabelle 2)**

| Versuch | Additiv | Einsatzmenge [pphp] | Steigzeit [s] | Rückfall [cm] | Schaumhöh e [cm] | Raumgewicht [kg/m³] | Staudruck der Wassersäule [mm] | Zellzahl [1/cm] | Kommentar |
|---|---|---|---|---|---|---|---|---|---|
| 8 | Kein Additiv | - | 136 | - | < 5 cm | - | - | - | Kollaps |
| 9 | Marlon AM 80 | 0,84 | 151 | - | < 5 cm | - | - | - | Kollaps |
| 10 | Petroleumsulfonat | 0,84 | 150 | - | < 5 cm | - | - | - | Kollaps |
| 11 | Rewoquat W 3690 | 0,84 | 155 | - | < 5 cm | - | - | - | Kollaps |
| 12 | Tegoamid D5040 | 0,84 | 125 | - | < 5 cm | - | - | - | Kollaps |
| 13 | Oxazasilinan | 0,025 | 111 | - | < 5 cm | - | - | - | Kollaps |
| 14 | Mischung aus Rewoquat, Tegoamid, Oxazasilinan (49,25%, 49,25%, 1,50%) (erfindugsgemäße Additivzusammensetzung) | 1,7 | 137 | -0,5 | 26,8 | 25,1 | 25 | 10 | Offene, feinzellige und homogene Schaumstruktur |

| | | | | | | | | | |
|---|---|---|---|---|---|---|---|---|---|
| [pphp] = Gew.-Teile pro 100 Gew.-Teile Polyol *= Eine Bestimmung der physikalischen Parameter Raumgewicht, Luftdurchlässigkeit und Zellzahl ist bei einer inhomogenen Verteilung über den Probenkörper nicht sinnvoll. Bei einem Teilkollaps des sich bildenden Polyurethanschaums kommt es zu starken Verdichtungen in der Bodenzone. | | | | | | | | | |

Es zeigte sich bei beiden Versuchsreihen, dass eine Verschäumung des Polybutadien-Polyols ohne den Zusatz von geeigneten Additiven zu Instabilitäten und Kollaps führt (Versuch 1 und 8). Der Zusatz von zwei handelsüblichen Sulfonaten ändert an der Instabilität nichts und es wurde weiterhin ein Kollaps beobachtet (Versuche 2 & 3 und 9 & 10). Das gleiche wurde bei Zusatz von dem Rewoquat beobachtet (Versuche 4 und 11). Bei Verwendung des Tegoamid D 5040 resultierte bei dem Versuch mit 100 % Polybutadien-Polyol (Versuch 5) ein Teilkollaps. Die endgültige Schaumhöhe ist wesentlich geringer als die erwartete Schaumhöhe (16,5 cm gegenüber etwa 28 cm) und der gebildete Schaum weist im unteren Bereich starke Verdichtungen auf. Bei der Verwendung einer Mischung aus Polyether-Polyol und Polybutadien-Polyol wurde ein Kollaps beobachtet (Versuch 12). Der alleinige Zusatz eines Oxazasilinan verkürzte zwar die Steigzeit signifikant, aber führte nicht zur Bildung eines stabilen Schaums (Versuch 6 und 13).

Überraschenderweise wird bei Einsatz der erfindungsgemäß einzusetzenden Additive in beiden Rezepturen ein stabiler Schaum mit lediglich minimalem Rückfall erhalten (Versuch 7 und 14). Die physikalischen Eigenschaften sind dabei homogen über den Schaumkörper verteilt, sodass eine Bestimmung dieser Eigenschaften sinnvoll war. Das Raumgewicht des gebildeten Polyurethanweichschaums ist mit 24,2 kg/m³ und 25,1 kg/m³ im gewünschten Bereich. Die Steigzeit ist mit 145 s und 137 s in einem Intervall, welches auch für die Produktion industrieller Polyurethan-Weichschäume auf Basis von Polyether-Polyol typisch ist. Der in den Versuchen 7 und 14 gebildete Polyurethan-Weichschaum ist offenzellig (Staudruck < 100 mm Wassersäule) und hat eine Zellfeinheit (Versuch 7: 15 Zellen/cm; Versuch 14: 10 Zellen/cm), wie sie auch bei industriellen Polyurethanweichschäumen basierend auf Polyether-Polyol anzutreffen ist.

## Patentansprüche

1. Verfahren zur Herstellung von Polyurethanschäumen mit einer Dichte < 100 kg/m³ durch Umsetzung einer oder mehrerer Polyolkomponenten mit einer oder mehrerer Isocyanatkomponenten,
wobei mindestens 15 Gew. % Polyolefin-Polyol bezogen auf die gesamte eingesetzte Menge Polyol eingesetzt werden,
**dadurch gekennzeichnet, dass** als Additiv eine Additivzusammensetzung eingesetzt wird, die mindestens ein ionisches Tensid B, ausgewählt aus einer quaternisierten Ammoniumverbindung, sowie mindestens eine tertiäre Aminverbindung C, die kein Oxazasilinan ist und eine Molmasse von mindestens 150 g/mol aufweist, sowie mindestens ein Oxazasilinan D enthält.

2. Verfahren nach Anspruch 1, **dadurch gekennzeichnet, dass** als Polyolkomponente eine Polyolmischung eingesetzt wird, welche mindestens 25 Gew. %, vorzugsweise mindestens 50 Gew.-%, insbesondere mindestens 75 Gew.-% Polyolefin-Polyol bezogen auf die gesamte eingesetzte Menge Polyol enthält.

3. Verfahren nach einem der Ansprüche 1 bis 2, **dadurch gekennzeichnet, dass** das Polyolefin-Polyol ausgewählt ist aus Polybutadien-Polyol, hydriertem Polybutadien-Polyol und/oder Polyisopren-Polyol.

4. Verfahren nach einem der Ansprüche 1 bis 3, **dadurch gekennzeichnet, dass** 0,001 bis 5 Gew.-Teile, insbesondere 0,2 bis 3 Gew.-Teile Amin C pro 100 Gew.-Teilen des insgesamt eingesetzten Polyols eingesetzt werden.

5. Verfahren nach einem der Ansprüche 1 bis 4, **dadurch gekennzeichnet, dass** die Additivzusammensetzung mindestens ein Oxazasilinan aufweist, wobei es sich um 2,2,4-Trimethyl-1,4,2-oxazasilinan gemäß Formel (III) handelt

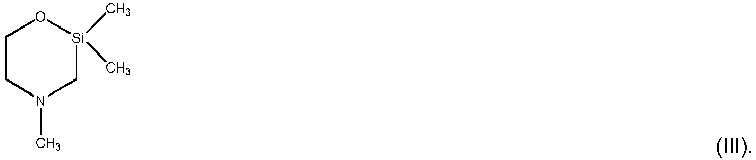

6. Verfahren nach Anspruch 5, **dadurch gekennzeichnet, dass** das Massenverhältnis der Summe aller Amine C zur Summe aller Oxazasilinane D von 500:1 bis 1:1, bevorzugt von 200:1 bis 5:1 und besonders bevorzugt von 50 : 1 bis 10:1 beträgt.

7. Verfahren nach einem der Ansprüche 1 bis 6, **dadurch gekennzeichnet, dass** in der Additivzusammensetzung als ionisches Tensid B zumindest eine Imidazolium-Verbindung der Formel (IV) enthalten ist, 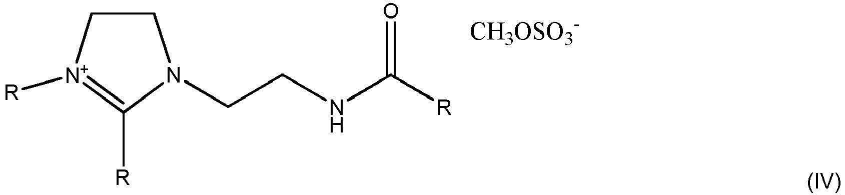 mit R gleiche oder unterschiedliche, gesättigte oder ungesättigte, gegebenenfalls alkoxylierte Kohlenwasserstoffreste mit 1 bis 30 Kohlenstoffatomen.

8. Verfahren nach einem der Ansprüche 1 bis 7, **dadurch gekennzeichnet, dass** die Menge an Additivzusammensetzung so gewählt wird, dass 0,001 bis 10 Gew.-Teile, insbesondere 0,2 bis 5 Gew.-Teile der Additivzusammensetzung pro 100 Gew.-Teilen des insgesamt eingesetzten Polyol eingesetzt werden.

9. Verfahren nach einem der Ansprüche 1 bis 8, **dadurch gekennzeichnet, dass** die Additivzusammensetzung zumindest 3 Komponenten umfasst, nämlich
(i) als tertiäre Aminverbindung C, die eine Molmasse von mindestens 150 g/mol aufweist, zumindest eine Verbindung der Formel (V) 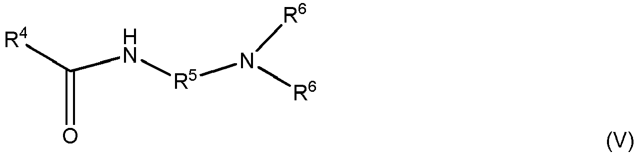 mit
R⁴= gesättigte oder ungesättigte Kohlenwasserstoffreste mit 5 bis 30, vorzugsweise 8 bis 20 Kohlenstoffatomen,
R⁵ = zweiwertiger Alkylrest mit 2 oder 3 Kohlenstoffatomen,
R⁶ = gleiche oder verschiedene, vorzugsweise gleiche Alkylreste mit 1 bis 3 Kohlenstoffatomen, bevorzugt Methylreste,
und zwar insbesondere Dimethylaminopropyl-Cocossäureamid,
(ii) als mindestens ein ionisches Tensid B, ausgewählt aus einer quaternisierten Ammoniumverbindung, zumindest eine Imidazolium-Verbindung, insbesondere eine Imidazolium-Verbindung der Formel (IV), 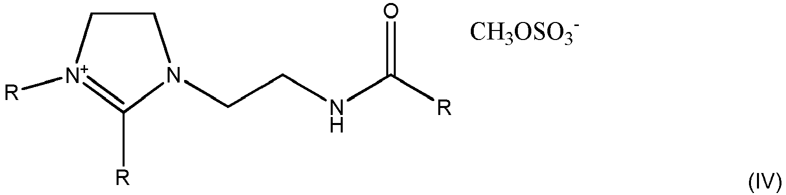 mit R gleiche oder unterschiedliche, gesättigte oder ungesättigte, gegebenenfalls alkoxylierte Kohlenwasserstoffreste mit 1 bis 30 Kohlenstoffatomen,
(iii) mindestens ein Oxazasilinan, und zwar insbesondere 2,2,4-Trimethyl-1,4,2-oxazasilinan Formel (III) 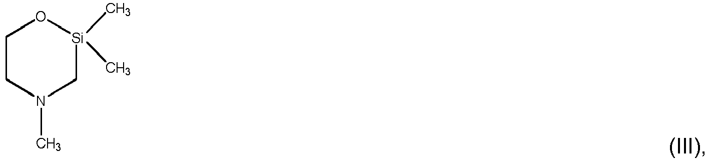 wobei als Polyolkomponente eine Polyolmischung eingesetzt wird, welche mindestens 25 Gew. %, vorzugsweise mindestens 50 Gew.-%, vorteilhafterweise mindestens 75 Gew.-%, inbesondere 100 Gew.-% Polyolefin-Polyol bezogen auf die gesamte eingesetzte Menge Polyol enthält.

10. Polyurethanschaum erhältlich durch ein Verfahren gemäß einem der Ansprüche 1 bis 9.

11. Polyurethanschaum nach Anspruch 10, wobei die Dichte des Polyurethanweichschaums kleiner als 50 kg/m³ ist.

12. Artikel enthaltend oder bestehend aus einem Polyurethanschaum gemäß Anspruch 10 oder 11.

13. Zusammensetzung, geeignet zur Herstellung von Polyurethanschäumen, **dadurch gekennzeichnet, dass** sie eine Mischung aus Polyol und einer Additivzusammensetzung, wie in einem der Ansprüche 1 bis 9 definiert, umfasst, wobei bezogen auf die gesamte Menge Polyol mindestens 15 Gew. % Polyolefin-Polyol enthalten sind.

14. Zusammensetzung gemäß Anspruch 13, **dadurch gekennzeichnet, dass** bezogen auf die gesamte Menge Polyol mindestens 50 Gew.-%, vorzugsweise mindestens 75 Gew.-%, insbesondere mindestens 90 Gew.-% Polyolefin-Polyol enthalten sind.

15. Verwendung einer Additivzusammensetzung enthaltend
mindestens ein ionisches Tensid B, ausgewählt aus einer quaternisierten Ammoniumverbindung, sowie mindestens eine tertiäre Aminverbindung C, die kein Oxazasilinan ist und eine Molmasse von mindestens 150 g/mol aufweist, sowie mindestens ein Oxazasilinan D,
zur Herstellung von Polyurethanschäumen mit einer Dichte < 100 kg/m³ durch Umsetzung einer oder mehrerer Polyolkomponenten mit einer oder mehrerer Isocyanatkomponenten, wobei mindestens 15 Gew. % Polyolefin-Polyol bezogen auf die gesamte eingesetzte Menge Polyol eingesetzt werden.

## Claims

1. Method of producing polyurethane foams having a density < 100 kg/m³ by reacting one or more polyol components with one or more isocyanate components, which comprises using at least 15 wt% of polyolefin polyol, based on the total amount of polyol used,
**characterized in that** an additive used comprises an additive composition comprising at least one ionic surfactant B selected from a quaternized ammonium compound, and also at least a tertiary amine compound C which is not an oxazasilinane and has a molar mass of at least 150 g/mol, and also at least one oxazasilinane D.

2. Method according to Claim 1, **characterized in that** one polyol component used is a polyol mixture comprising at least 25 wt%, preferably at least 50 wt% and particularly at least 75 wt% of polyolefin polyol, based on the total amount of polyol used.

3. Method according to either of Claims 1 and 2, **characterized in that** the polyolefin polyol is selected from polybutadiene polyol, hydrogenated polybutadiene polyol and/or polyisoprene polyol.

4. Method according to any of Claims 1 to 3, **characterized in that** 0.001 to 5 parts by weight, in particular 0.2 to 3 parts by weight of amine C are used per 100 parts by weight of total polyol used.

5. Method according to any of Claims 1 to 4, **characterized in that** the additive composition includes at least one oxazasilinane, wherein the at least one oxazasilinane is 2,2,4-trimethyl-1,4,2-oxazasilinane of formula (III)

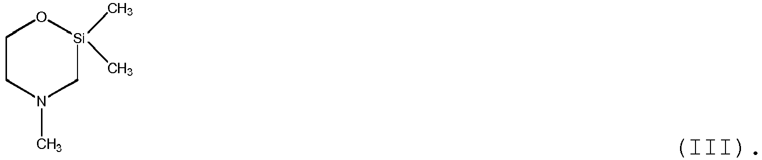

6. Method according to Claim 5, **characterized in that** the mass ratio of the sum total of all amines C to the sum total of all oxazasilinanes D is in the range from 500:1 to 1:1, preferably in the range from 200:1 to 5:1 and more preferably in the range from 50:1 to 10:1.

7. Method according to any of Claims 1 to 6, **characterized in that** the additive composition comprises by way of ionic surfactant B at least an imidazolium compound of formula (IV), 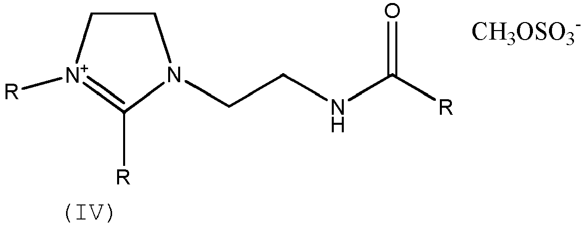 where R represents alike or different, saturated or unsaturated, optionally alkoxylated hydrocarbon moieties of 1 to 30 carbon atoms.

8. Method according to any of Claims 1 to 7, **characterized in that** the amount of additive composition is chosen such that 0.001 to 10 parts by weight, in particular 0.2 to 5 parts by weight of the additive composition are used per 100 parts by weight of total polyol used.

9. Method according to any of Claims 1 to 8, **characterized in that** the additive composition comprises at least 3 components, viz.
(i) as tertiary amine compound C having a molar mass of at least 150 g/mol at least a compound of formula (V) 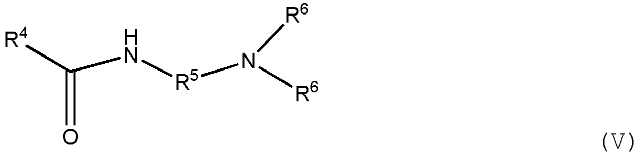 where
R⁴ = saturated or unsaturated hydrocarbon moieties of 5 to 30, preferably 8 to 20 carbon atoms,
R⁵ = divalent alkyl of 2 or 3 carbon atoms,
R⁶ = alike or different, preferably alike alkyl moieties of 1 to 3 carbon atoms, preferably methyl,
and specifically dimethylaminopropyl cocamide,
(ii) as at least one ionic surfactant B selected from a quaternized ammonium compound at least an imidazolium compound, in particular an imidazolium compound of formula (IV), 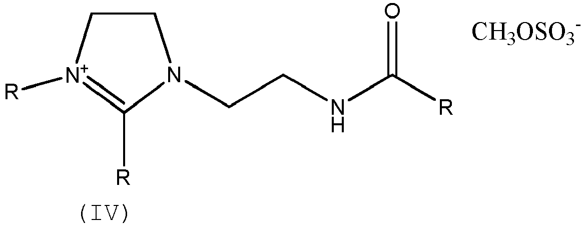 where R represents alike or different, saturated or unsaturated, optionally alkoxylated hydrocarbon moieties of 1 to 30 carbon atoms,
(iii) at least one oxazasilinane, specifically 2,2,4-trimethyl-1,4,2-oxazasilinane formula (III) 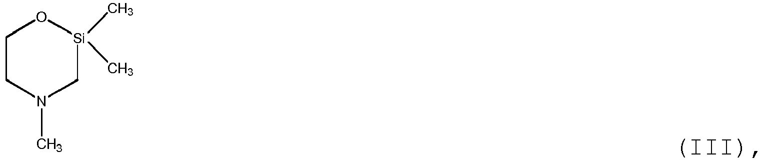 wherein one polyol component used is a polyol mixture comprising at least 25 wt%, preferably at least 50 wt%, advantageously at least 75 wt% and particularly 100% of polyolefin polyol, based on the total amount of polyol used.

10. Polyurethane foam obtainable by a method according to any of Claims 1 to 9.

11. Polyurethane foam according to Claim 10, wherein the density of flexible polyurethane foam is less than 50 kg/m³.

12. Article containing or consisting of a polyurethane foam according to Claim 10 or 11.

13. Composition useful for producing polyurethane foams, **characterized in that** it comprises a mixture of polyol and an additive composition as defined in any of Claims 1 to 9, wherein at least 15 wt% of the total amount of polyol is polyolefin polyol.

14. Composition according to Claim 13, **characterized in that** at least 50 wt%, preferably at least 75 wt% and especially at least 90 wt% of the total amount of polyol is polyolefin polyol.

15. Use of an additive composition comprising at least one ionic surfactant B selected from a quaternized ammonium compound, and also at least a tertiary amine compound C which is not an oxazasilinane and has a molar mass of at least 150 g/mol, and also at least one oxazasilinane D, for producing polyurethane foams having a density < 100 kg/m³ by reacting one or more polyol components with one or more isocyanate components, which comprises using at least 15 wt% of polyolefin polyol, based on the total amount of polyol used.

## Revendications

1. Procédé pour la préparation de mousses de polyuréthane présentant une densité < 100 kg/m³ par transformation d'un ou de plusieurs composants polyol avec un ou plusieurs composants isocyanate,
au moins 15% en poids de polyoléfine-polyol, par rapport à la quantité totale utilisée de polyol, étant utilisés, **caractérisé en ce qu'**on utilise, comme additif, une composition d'additifs, qui contient au moins un tensioactif ionique B, choisi parmi un composé d'ammonium quaternaire, ainsi qu'au moins un composé d'amine tertiaire C, qui n'est pas un oxazasilinane et qui présente une masse molaire d'au moins 150 g/mole, ainsi qu'au moins un oxazasilinane D.

2. Procédé selon la revendication 1, **caractérisé en ce qu'**on utilise, comme composant polyol, un mélange de polyols qui contient au moins 25% en poids, de préférence au moins 50% en poids, en particulier au moins 75% en poids de polyoléfine-polyol par rapport à la quantité totale utilisée de polyol.

3. Procédé selon l'une quelconque des revendications 1 à 2, **caractérisé en ce que** le polyoléfine-polyol est choisi parmi le polybutadiène-polyol, le polybutadiène-polyol hydrogéné et/ou le polyisoprène-polyol.

4. Procédé selon l'une quelconque des revendications 1 à 3, **caractérisé en ce qu'**on utilise 0,001 à 5 parties en poids, en particulier 0,2 à 3 parties en poids d'amine C pour 100 parties en poids du polyol utilisé au total.

5. Procédé selon l'une quelconque des revendications 1 à 4, **caractérisé en ce que** la composition d'additifs présente au moins un oxazasilinane, où il s'agit du 2,2,4-triméthyl-1,4,2-oxazasilinane selon la formule (III)

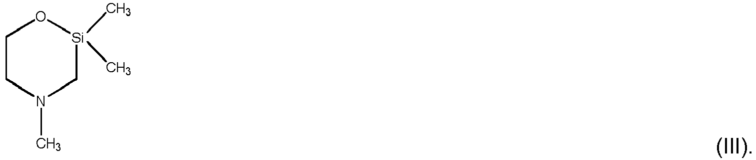

6. Procédé selon la revendication 5, **caractérisé en ce que** le rapport massique de la somme de toutes les amines C à la somme de tous les oxazasilinanes D est de 500:1 à 1:1, de préférence de 200:1 à 5:1 et de manière particulièrement préférée de 50:1 à 10:1.

7. Procédé selon l'une quelconque des revendications 1 à 6, **caractérisé en ce que** la composition d'additifs contient, comme tensioactif ionique B, au moins un composé d'imidazolium de formule (IV), 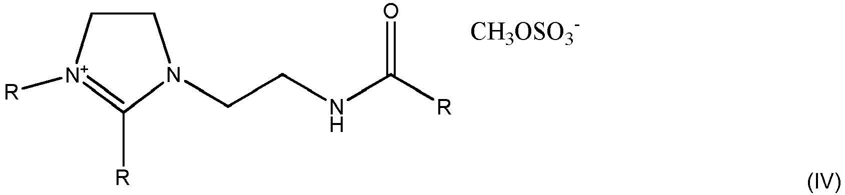 dans laquelle R représente des radicaux hydrocarbonés identiques ou différents, saturés ou insaturés, le cas échéant alcoxylés, comprenant 1 à 30 atomes de carbone.

8. Procédé selon l'une quelconque des revendications 1 à 7, **caractérisé en ce que** la quantité de composition d'additifs est choisie de manière telle qu'on utilise 0,001 à 10 parties en poids, en particulier 0,2 à 5 parties en poids de la composition d'additifs pour 100 parties en poids du polyol utilisé au total.

9. Procédé selon l'une quelconque des revendications 1 à 8, **caractérisé en ce que** la composition d'additifs comprend au moins 3 composants, à savoir
(i) comme composé d'amine tertiaire C qui présente une masse molaire d'au moins 150 g/mole, au moins un composé de formule (V) 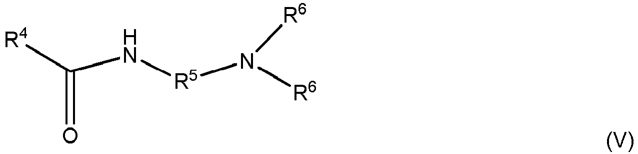 dans laquelle
R⁴ = des radicaux hydrocarbonés saturés ou insaturés comprenant 5 à 30, de préférence 8 à 20 atomes de carbone,
R⁵ = un radical alkyle divalent comprenant 2 ou 3 atomes de carbone,
R⁶ = des radicaux alkyle identiques ou différents, de préférence identiques, comprenant 1 à 3 atomes de carbone, de préférence des radicaux méthyle,
et en particulier l'amide diméthylaminopropylique d'acide de coco
(ii) comme au moins un tensioactif ionique B, choisi parmi un composé d'ammonium quaternaire, au moins un composé d'imidazolium, en particulier un composé d'imidazolium de formule (IV) 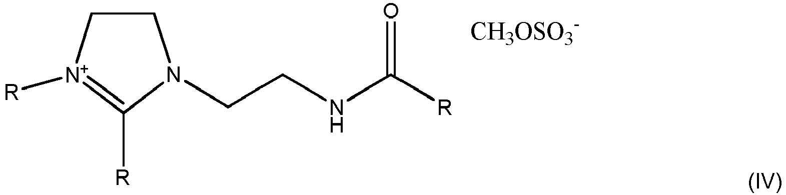 dans laquelle R représente des radicaux hydrocarbonés identiques ou différents, saturés ou insaturés, le cas échéant alcoxylés, comprenant 1 à 30 atomes de carbone,
(iii) au moins un oxazasilinane et en particulier le 2,2,4-triméthyl-1,4,2-oxazasilinane de formule (III) 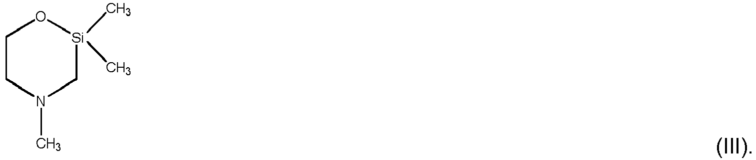 où on utilise, comme composant polyol, un mélange de polyols qui contient au moins 25% en poids, de préférence au moins 50% en poids, avantageusement au moins 75% en poids, en particulier au moins 100% en poids de polyoléfine-polyol par rapport à la quantité totale utilisée de polyol.

10. Mousse de polyuréthane, pouvant être obtenue par un procédé selon l'une quelconque des revendications 1 à 9.

11. Mousse de polyuréthane selon la revendication 10, la densité de la mousse souple de polyuréthane étant inférieure à 50 kg/m³.

12. Article contenant ou constitué par une mousse de polyuréthane selon la revendication 10 ou 11.

13. Composition appropriée pour la préparation de mousses de polyuréthane, **caractérisée en ce qu'**elle comprend un mélange de polyol et d'une composition d'additifs telle que définie dans l'une quelconque des revendications 1 à 9, la composition comprenant au moins 15% en poids de polyoléfine-polyol par rapport à la quantité totale de polyol.

14. Composition selon la revendication 13, **caractérisée en ce qu'**elle contient, par rapport à la quantité totale de polyol, au moins 50% en poids, de préférence au moins 75% en poids, en particulier au moins 90% en poids de polyoléfine-polyol.

15. Utilisation d'une composition d'additifs contenant au moins un tensioactif ionique B, choisi parmi un composé d'ammonium quaternaire, ainsi qu'au moins un composé d'amine tertiaire C, qui n'est pas un oxazasilinane et qui présente une masse molaire d'au moins 150 g/mole, ainsi qu'au moins un oxazasilinane D, pour la préparation de mousses de polyuréthane présentant une densité < 100 kg/m³ par transformation d'un ou de plusieurs composants polyol avec un ou plusieurs composants isocyanate, au moins 15% en poids de polyoléfine-polyol, par rapport à la quantité totale utilisée de polyol, étant utilisés.
